# EUROPEAN PATENT APPLICATION

(11) **EP 4 791 011 A1**
(43) Date of publication of application: **12.08.2026**
(21) Application number: 24874947.5
(22) Date of filing: 02.10.2024
(51) Int. Cl.: H04N 21/81, H04N 21/845, H04N 19/597, H04N 19/463

(54) **METHOD PERFORMED BY POINT CLOUD DATA RECEPTION DEVICE AND METHOD PERFORMED BY POINT CLOUD DATA TRANSMISSION DEVICE**

(30) Priority: 06.10.2023 US 202363542777 P; 07.10.2023 US 202363543071 P
(71) Applicant: LG Electronics Inc., Yeongdeungpo-gu Seoul 07336 (KR)
(72) Inventor: TAN, Hendry, Seoul 06772 (KR); LEE, Jinwon, Seoul 06772 (KR); SUH, Jongyeul, Seoul 06772 (KR); KIM, Seunghwan, Seoul 06772 (KR)
(74) Representative: Jung, Minkyu
(86) International application number: PCT/KR2024/014969
(87) International publication number: WO 2025/075391

(57) **Abstract**

Provided are a method performed by a point cloud data reception device and a method performed by a reception device. The method performed by a point cloud data reception device according to the present disclosure comprises the steps of: identifying one or more tracks from the point cloud data; extracting one or more samples from the tracks; and decoding the samples on the basis of a parameter set, wherein the parameter set may be acquired on the basis of information included in a geometry-based point cloud compression (G-PCC) parameter set sample group entry.

## Description

### [Technical Field]

The present disclosure relates to a method and device for processing point cloud content.

### [Background Art]

Point cloud content is content represented by a point cloud, which is a set of points belonging to a coordinate system representing a three-dimensional space (or volume). The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

### [Disclosure]

### [Technical Problem]

An object of the present disclosure is to provide a method and device for efficiently processing point cloud data.

Another object of the present disclosure is to provide a method and device for providing a point cloud content service that efficiently stores a G-PCC bitstream in a single track or multiple tracks within a file and provides signaling therefor.

Another object of the present disclosure is to provide a method and device for processing a file storage technique to support efficient access to a stored G-PCC bitstream.

Another object of the present disclosure is to provide a method and device for dividing and storing a G-PCC bitstream into one or more tacks within a file in addition to the file storage technique.

The technical problems solved by the present disclosure are not limited to the above technical problems and other technical problems which are not described herein will become apparent to those skilled in the art from the following description.

### [Technical Solution]

A method performed by a reception device for point cloud data according to an embodiment of the present disclosure may identifying one or more tracks from the point cloud data, extracting one or more samples from the tracks, and decoding the samples based on a parameter set, wherein the parameter set may be obtained based on information included in a G-PCC (geometry-based point cloud compression) parameter set sample group entry.

A method performed by a transmission device for point cloud data according to another embodiment of the present disclosure may include storing a bitstream including the point cloud date at one or more tracks, and generating a G-PCC (geometry-based point cloud compression) file based on the tracks, wherein the tracks may include one or more samples, at least one of the samples including a parameter set, and the parameter set may be encoded based on information included in a G-PCC parameter set sample group entry.

### [Advantageous Effects]

According to the present disclosure, a method and device for efficiently processing point cloud data may be provided.

According to the present disclosure, a method and device for providing a point cloud content service that efficiently stores a G-PCC bitstream in a single track or multiple tracks within a file and provides signaling therefor may be provided.

According to the present disclosure, a method and device for processing a file storage technique to support efficient access to a stored G-PCC bitstream may be provided.

According to the present disclosure, a method and device for dividing and storing a G-PCC bitstream into one or more tacks within a file may be provided in addition to the file storage technique.

The effects obtainable in the present disclosure are not limited to the above-mentioned effects, and other effects not mentioned may be clearly understood by those of ordinary skill in the art from the following description.

### [Brief Description of the Drawings]

FIG. 1 is a block diagram illustrating an example of a point cloud content providing system according to embodiments of the present disclosure.
FIG. 2 is a block diagram illustrating an example of a point cloud content providing process according to embodiments of the present disclosure.
FIG. 3 illustrates an example of a point cloud encoding device according to embodiments of the present disclosure.
FIG. 4 is a block diagram illustrating an example of a point cloud decoding device according to embodiments of the present disclosure.
FIG. 5 is a block diagram illustrating another example of a point cloud decoding device according to embodiments of the present disclosure.
FIG. 6 is a block diagram illustrating another example of a transmission device according to embodiments of the present disclosure.
FIG. 7 is a block diagram illustrating another example of a reception device according to embodiments of the present disclosure.
FIG. 8 illustrates an example of a structure interoperable with a point cloud data transmission/reception method/device according to embodiments of the present disclosure.
FIG. 9 is a block diagram illustrating still another example of a transmission device according to embodiments of the present disclosure.
FIG. 10 illustrates an example of spatial partitioning of a bounding box into three-dimensional blocks according to embodiments of the present disclosure.
FIG. 11 is a block diagram illustrating still another example of a reception device according to embodiments of the present disclosure.
FIG. 12 illustrates an example of a file including a single track according to embodiments of the present disclosure.
FIG. 13 illustrates an example of a file including multiple tracks according to embodiments of the present disclosure.
FIG. 14 illustrates a method performed by a point cloud data reception device according to the present disclosure.
FIG. 15 illustrates a method performed by a point cloud data transmission device according to the present disclosure.

### [Mode for Disclosure]

Hereinafter, embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of point cloud related data, and terms used in the present disclosure may have a general meaning commonly understood in the technical field to which the present disclosure belongs, unless newly defined in the present disclosure.

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

The present disclosure relates to compression of point cloud related data. Various methods or embodiments of the present disclosure may be applied to a point cloud compression or point cloud coding (PCC) standard of moving picture experts group (MPEG) (e.g., G-PCC or V-PCC standard) or a next-generation video/image coding standard.

In the present disclosure, "point cloud" may mean a set of points located in a three-dimensional (3D) space. Also, in the present disclosure, "point cloud content" is content represented by a point cloud and may mean "point cloud video/image." Hereinafter, 'point cloud video/image' is referred to as 'point cloud video.' A point cloud video may include one or more frames, and one frame may be a still image or a picture. Accordingly, a point cloud video may include a point cloud image/frame/picture, which may be referred to as any one of "point cloud image," "point cloud frame," and "point cloud picture."

In the present disclosure, "point cloud data" may mean data or information related to each point within a point cloud. Point cloud data may include geometry and/or an attributte. The point cloud data may further include metadata. Point cloud data may be referred to as "point cloud content data" or "point cloud video data," or the like. Also, point cloud data may be referred to as "point cloud content," "point cloud video," "G-PCC data," or the like.

In the present disclosure, a point cloud object corresponding to point cloud data may be represented in a box shape based on a coordinate system, and this box shape based on a coordinate system may be referred to as a bounding box. That is, the bounding box may be a rectangular cuboid capable of containing all points of the point cloud, and may be a rectangular cuboid in which a source point cloud frame is included.

In the present disclosure, geometry may include a position (or position information) of each point, and this position may be indicated by parameters (e.g., x-axis value, y-axis value, and z-axis value) representing a 3D coordinate system (e.g., a coordinate system consisting of x-axis, y-axis, and z-axis). Geometry may be referred to as "geometry information."

In the present disclosure, an attribute may include an attribute of each point. This attribute may include one or more of texture information, color (RGB or YCbCr), reflectance (r), transparency, etc., of each point. An attribute may be referred to as "attribute information." Metadata may include various data related to acquisition in an acquisition process, which will be described later.

### Overview of Point Cloud Content Providing System

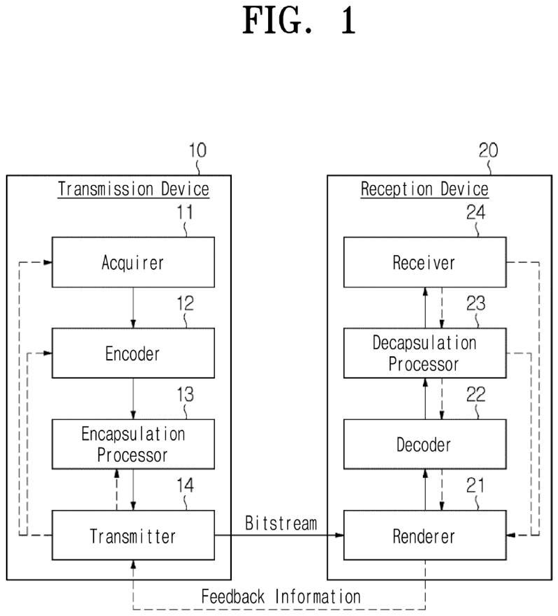

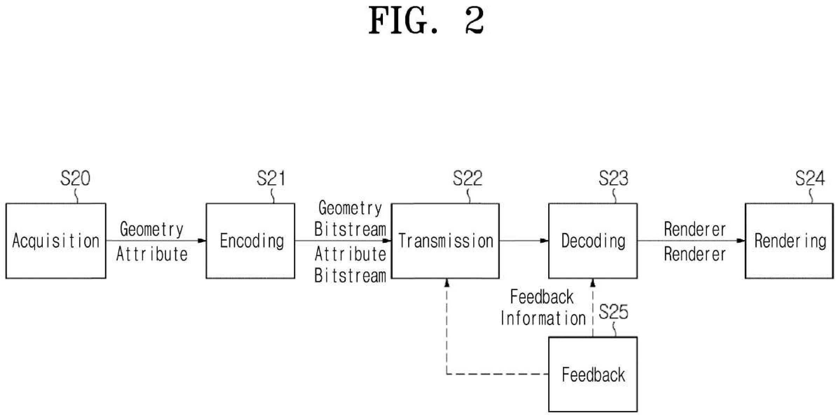

FIG. 1 illustrates an example of a system for providing point cloud content (hereinafter, referred to as a "point cloud content providing system") according to embodiments of the present disclosure. FIG. 2 illustrates an example of a process in which a point cloud content providing system provides point cloud content.

As illustrated in FIG. 1, a point cloud content providing system may include a transmission device 10 and a reception device 20. The point cloud content providing system may perform an acquisition operation S20, an encoding operation S21, a transmission operation S22, a decoding operation S23, a rendering operation S24, and/or a feedback operation S25 illustrated in FIG. 2 by the operations of the transmission device 10 and the reception device 20.

To provide point cloud content, the transmission device 10 may acquire point cloud data and output a bitstream through a series of operations (for example, an encoding operation) on the acquired point cloud data (source point cloud data). Here, the point cloud data may be output in the form of a bitstream through the encoding operation. According to embodiments, the transmission device 10 may transmit the output bitstream to the reception device 20 in the form of a file or streaming (streaming segment) through a digital storage medium or a network. The digital storage medium may include various storage media such as USB, SD, CD, DVD, Blu-ray, HDD, and SSD. The reception device 20 may process (e.g., decode or reconstruct) the received data (e.g., encoded point cloud data) back into the source point cloud data to render the data. Through these operations, point cloud content may be provided to a user, and the present disclosure may provide various embodiments necessary to effectively perform such a series of operations.

As illustrated in FIG. 1, the transmission device 10 may include an acquirer 11, an encoder 12, an encapsulation processor 13, and a transmitter 14, and the reception device 20 may include a receiver 21, a decapsulation processor 22, a decoder 23, and a rendering part 24.

The acquirer 11 may perform the operation S20 of acquiring point cloud video through a capture, synthesis, or generation operation. Accordingly, the acquirer 11 may be referred to as "point cloud video acquisition."

Point cloud data (geometry and/or attributes, etc.) for multiple points may be generated by the acquisition operation S20. Also, through the acquisition operation S20, metadata related to the acquisition of point cloud video may be generated. In addition, mesh data (e.g., triangle-shaped data) indicating connectivity between point clouds may be generated by the acquisition operation S20.

The metadata may include initial viewing orientation metadata. The initial viewing orientation metadata may indicate whether the point cloud data is data representing the front or data representing the back. Metadata may be referred to as "auxiliary data," which is metadata for the point cloud.

The acquired point cloud video may include a PLY (polygon file format or stanford triangle format) file. Since the point cloud video has one or more frames, the acquired point cloud video may include one or more PLY files. A PLY file may contain point cloud data of each point.

To acquire point cloud video (or point cloud data), the acquirer 11 may include a combination of camera equipment capable of acquiring depth (depth information) and RGB cameras capable of extracting color information corresponding to the depth information. Here, the camera equipment capable of acquiring depth information may be a combination of an infrared pattern projector and an infrared camera. Also, the acquirer 11 may include LiDAR. The LiDAR may employ a radar system configured to measure the position coordinates of a reflector by emitting laser pulses and measuring the time it takes for the pulses to reflect and return.

The acquirer 110 may extract a shape of geometry composed of points in a 3D space from the depth information, and extract an attribute representing color, reflection, or the like of each point from the RGB information.

As a method of extracting (or capturing, acquiring, etc.) point cloud video (or point cloud data), there may be an inward-facing method for capturing a center object and an outward-facing method for capturing an external environment.

When a point cloud video for a computer-generated virtual space is to be provided, capturing with an actual camera may not be performed. In this case, post-processing for improving the quality of captured point cloud content may be required. For example, in the acquisition operation S20, the maximum/minimum depth may be adjusted within a range provided by the camera equipment, but post-processing for removing an unwanted area (e.g., background) or point data of the unwanted area or post-processing for recognizing a connected space and filling spatial holes may be performed. As another example, post-processing may be performed in which point cloud data extracted from cameras sharing a spatial coordinate system is integrated into one piece of content through the process of transforming each point into a global coordinate system based on the the coordinates of the location of each camera. Thereby, one piece of point cloud content having a wide range may be generated, or point cloud content with a high density of points may be acquired.

The encoder 12 may perform the encoding process S21 of encoding data (geometry, attributes, and/or metadata, and/or mesh data, etc.) generated by the acquirer 11 into one or more bitstreams. Accordingly, the encoder 12 may be referred to as a "point cloud video encoder." The encoder 12 may encode the data generated by the acquirer 11 serially or in parallel.

The encoding operation S21 performed by the encoder 12 may be geometry-based point cloud compression (G-PCC). The encoder 12 may perform a series of procedures such as prediction, transform, quantization, and entropy coding for compression and coding efficiency.

Encoded point cloud data may be output in the form of a bitstream. When the encoding is based on a G-PCC procedure, the encoder 12 may divide the point cloud data into geometry and attributes for the encoding as described later. In this case, the output bitstream may include a geometry bitstream containing encoded geometry and an attribute bitstream containing encoded attribute. The output bitstream may further include one or more of a metadata bitstream containing metadata, an auxiliary bitstream containing auxiliary data, and a mesh data bitstream containing mesh data. The encoding operation S21 will be described in more detail below. A bitstream containing encoded point cloud data may be referred to as a "point cloud bitstream" or a "point cloud video bitstream."

The encapsulation processor 13 may encapsulate one or more bitstreams output from the encoder 12 into a form of a file or a segment. Accordingly, the encapsulation processor 13 may be referred to as a "file/segment encapsulation module." While the encapsulation processor 13 is illustrated as being configured as a separate component/module from the transmitter 14, the encapsulation processor 13 may be included in the transmitter 14 according to embodiments.

The encapsulation processor 13 may encapsulate the data into a file format such as ISOBMFF (ISO Base Media File Format) or process the same into a form such as other DASH segments. According to embodiments, the encapsulation processor 13 may include metadata in the file format. Metadata may be included in boxes of various levels in the ISOBMFF file format, or may be included as data in a separate track within a file. According to embodiments, the encapsulation processor 130 may encapsulate the metadata itself into a file. Metadata processed by the encapsulation processor 13 may be delivered from a metadata processor, etc., not shown in the drawing. The metadata processor may be included in the encoder 12 or may be configured as a separate component/module.

The transmitter 14 may perform the transmission operation S22 including applying processing according to a file format (processing for transmission) to the "encapsulated point cloud bitstream." The transmitter 140 may deliver the bitstream or a file/segment including the bitstream to the receiver 21 of the reception device 20 over a digital storage medium or a network. Accordingly, the transmitter 14 may be referred to as a "transmitter," a "communication module," or the like.

The transmitter 14 may process point cloud data according to any transmission protocol. Here, "processing point cloud data according to any transmission protocol" may be "processing for transmission." Processing for transmission may include processing for delivery over a broadcasting network, processing for delivery through broadband, and the like. According to an embodiment, the transmitter 14 may receive metadata from the metadata processor as well as point cloud data, and may apply processing for transmission to the received metadata. According to embodiments, the processing for transmission may be performed in a transmission processor, and the transmission processor may be included in the transmitter 14 or may be configured as a separate component/module from the transmitter 14.

The receiver 21 may receive the bitstream transmitted by the transmission device 10 or a file/segment including the bitstream. Depending on the channel for the transmission, the receiver 21 may receive the bitstream or the file/segment including the bitstream over a broadcasting network, or may receive the bitstream or the file/segment including the bitstream through broadband. Alternatively, the receiver 21 may receive the bitstream or the file/segment including the bitstream through a digital storage medium.

The receiver 21 may process the received bitstream or the file/segment including the bitstream according to the transmission protocol. The receiver 21 may perform a reverse process of the transmission processing (processing for transmission) so as to correspond to the processing for transmission performed by the transmission device 10. Among the received data, the receiver 21 may deliver encoded point cloud data to the decapsulation processor 22 and deliver metadata to a metadata parser. The metadata may be in the form of a signaling table. According to embodiments, the reverse process of the processing for transmission may be performed by a reception processor. Each of the reception processor, the decapsulation processor 22, and the metadata parser may be included in the receiver 21 or may be configured as a separate component/module from the receiver 21.

The decapsulation processor 22 may decapsulate the point cloud data in a file format (i.e., the bitstream in a file format) delivered from the receiver 21 or the reception processor. Accordingly, the decapsulation processor 22 may be referred to as a "file/segment decapsulation module."

The decapsulation processor 22 may acquire a point cloud bitstream or a metadata bitstream by decapsulating files according to ISOBMFF, etc. According to embodiments, the metadata (metadata bitstream) may be included in the point cloud bitstream. The acquired point cloud bitstream may be delivered to the decoder 23, and the acquired metadata bitstream may be delivered to the metadata processor. The metadata processor may be included in the decoder 23 or may be configured as a separate component/module. The metadata acquired by the decapsulation processor 22 may be in the form of a box or a track within a file format. When necessary, the decapsulation processor 23 may receive metadata required for decapsulation from the metadata processor. The metadata may be delivered to the decoder 23 so as to be used in the decoding operation S23, or may be delivered to the rendering part 24 so as to be used in the rendering operation S24.

The decoder 23 may receive a bitstream and perform an operation corresponding to the operation of the encoder 12, thereby performing the decoding operation S23 of decoding the point cloud bitstream (encoded point cloud data). Accordingly, the decoder 23 may be referred to as a "point cloud video decoder."

The decoder 23 may divide the point cloud data into geometry and attributes to be decoded. For example, the decoder 23 may reconstruct (decode) the geometry from a geometry bitstream, which is included in the point cloud bitstream, and may reconstruct (decode) an attribute based on an attribute bitstream, which is included in the point cloud bitstream, and the reconstructed geometry. A 3D point cloud video/image may be reconstructed based on position information according to the reconstructed geometry and attributes (such as color or texture) according to the decoded attribute. The decoding operation S23 will be described in more detail below.

The rendering part 24 may perform the rendering operation S24 of rendering the reconstructed point cloud video. Accordingly, the rendering part 24 may be referred to as a "renderer."

The rendering operation S24 may mean an operation of rendering and displaying point cloud content in a 3D space. The rendering operation S24 may include rendering according to a desired rendering method based on the position information and attribute information related to the points decoded through the decoding operation.

The points of the point cloud content may be rendered as vertices having a certain thickness, cubes having a specific minimum size centered at the position of the corresponding vertex, or circles centered at the position of the corresponding vertex, and the like. The rendered video may be displayed through a display. A user may view the entirety or a partial region of the rendered result through a VR/AR display or a general display.

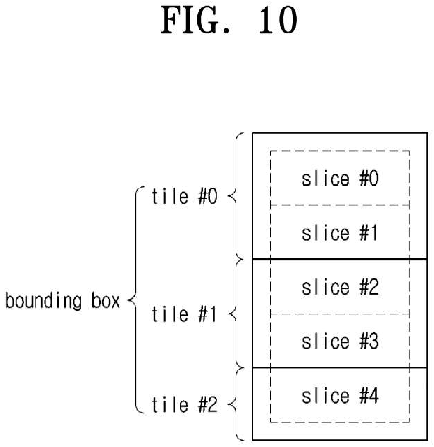

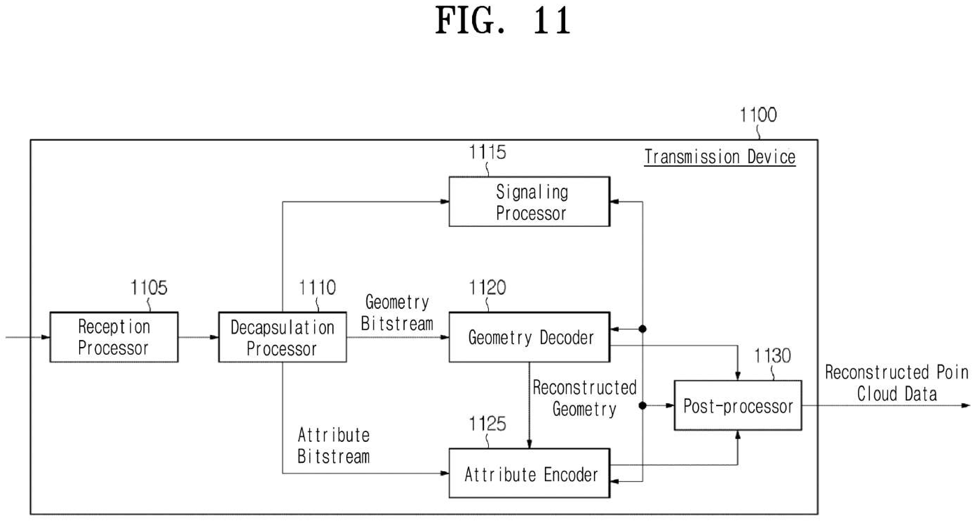

The feedback operation S25 may include delivering, to the transmission device 10, various feedback information that may be acquired in the rendering operation S24 or a display operation or delivering the same to other components in the reception device 20. The feedback operation S25 may be performed by one or more of the components included in the reception device 20 of FIG. 1, or may be performed by one or more of the components illustrated in FIGS. 10 and 11. According to embodiments, the feedback operation S25 may be performed by a "feedback unit" or a "sensing/tracking unit."

Interactivity for point cloud content consumption may be provided through the feedback operation S25. According to embodiments, head orientation information, viewport information indicating the region currently being viewed by the user, and the like may be fed back in the feedback operation S25. According to embodiments, a user may interact with objects implemented in a VR/AR/MR/self-driving environment. In this case, information related to the interaction may be delivered to the transmission device 10 or a service provider side in the feedback operation S25. According to embodiments, the feedback operation S25 may be skipped.

The head orientation information may mean information about the user's head position, angle, movement, and the like. Based on this information, information about the region currently being viewed by the user within the point cloud video, namely, viewport information, may be calculated.

The viewport information may be information about a region of the point cloud video currently viewed by the user. A viewpoint is a point which is viewed by the user in the point cloud video and may represent a center point of the viewport region. That is, a viewport is a region around a viewpoint, and the size and shape of the region may be determined by the field of view (FOV). Gaze analysis may be performed based on the viewport information to check the way the user consumes the point cloud video, a region of the point cloud video at which the user gazes, and how long the user gazes at the region. The gaze analysis may be performed at the receiving side (reception device) and the result of the analysis may be delivered to the transmitting side (the transmission device) on a feedback channel. A device such as a VR/AR/MR display may extract a viewport region based on the position/direction of the user's head, the vertical or horizontal FOV supported by the device, and the like.

According to embodiment, the feedback information may not only be delivered to the transmitting side (transmission device), but also be consumed at at the receiving side (reception device). That is, decoding and rendering operations at the receiving side (reception device) may be performed based on the feedback information.

For example, the reception device 20 may preferentially decode and render only the point cloud video for the region currently viewed by the user based on the head orientation information and/or the viewport information. Also, the receiver 21 may receive all point cloud data or may receive point cloud data indicated by the orientation information and/or viewport information based on the orientation information and/or viewport information. In addition, the decapsulation processor 22 may decapsulate all point cloud data or may decapsulate point cloud data indicated by the orientation information and/or viewport information based on the orientation information and/or viewport information. Further, the decoder 23 may decode all point cloud data or may decode point cloud data indicated by the orientation information and/or viewport information based on the orientation information and/or viewport information.

### Overview of Point Cloud Encoding Device

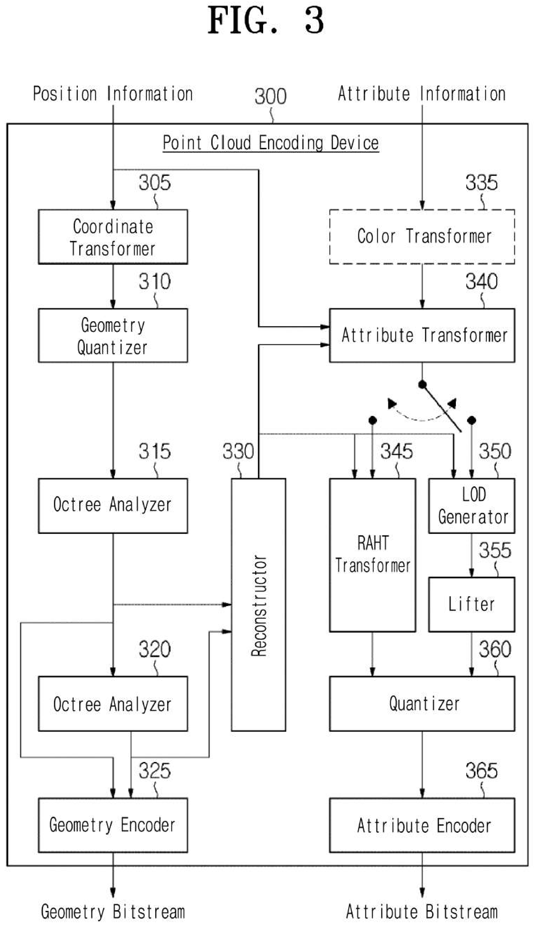

FIG. 3 illustrates an example of a point cloud encoding device 300 according to embodiments of the present disclosure. The point cloud encoding device 300 of FIG. 3 may correspond to the encoder 12 of FIG. 1 in configuration and function.

As illustrated in FIG. 3, the point cloud encoding device 300 may include a coordinate transformer 305, a geometry quantizer 310, an octree analyzer 315, an approximator 320, a geometry encoder 325, a reconstructor 330, an attribute transformer 340, an RAHT transformer 345, an LOD generator 350, a lifter 355, an attribute quantizer 360, an attribute encoder 365, and/or a color transformer 335.

Point cloud data acquired by the acquirer 11 may undergo operations for adjusting the quality of point cloud content (e.g., lossless, lossy, near-lossless) depending on network conditions or applications. Each point of the acquired point cloud content may be transmitted without loss. However, in this case, real-time streaming may not be possible because the size of the point cloud content is large. Therefore, to ensure smooth provision of point cloud content, an operation of reconstructing the point cloud content in accordance with a maximum target bitrate is necessary.

Operations for adjusting the quality of point cloud content may include reconstructing and encoding position information (position information included in geometry information) or color information (color information included in attribute information) related to points. The operation of reconstructing and encoding the position information related to points is referred to as geometry coding, and the operation of reconstructing and encoding attribute information related to each point may be referred to as attribute coding.

Geometry coding may include geometry quantization, voxelization, octree analysis, approximation, geometry encoding, and/or coordinate transform. The geometry coding may further include geometry reconstruction. Attribute coding may include color transform, attribute transform, prediction transform, lifting transform, RAHT transform, attribute quantization, and attribute encoding.

### Geometry Coding

The coordinate transform may correspond to an operation of transforming a coordinate system for positions of points. Accordingly, the coordinate transform may be referred to as "transform coordinates." The coordinate transform may be performed by the coordinate transformer 305. For example, the coordinate transformer 305 may transform positions of points from a global spatial coordinate system into position information in a 3D space (e.g., a 3D space represented by an X-axis, Y-axis, and Z-axis coordinate system). The position information in the 3D space according to embodiments may be referred to as "geometry information."

The geometry quantization may correspond to an operation of quantizing position information related to points and may be performed by the geometry quantizer 310. For example, the geometry quantizer 310 may find position information having minimum (x, y, z) values in the position information related to points and subtract the position information having the minimum (x, y, z) values from the position information related to each point. Also, the geometry quantizer 310 may perform the quantization by multiplying the values obtained by the subtraction by a preset quantization scale value and then adjusting (rounding down or up) the results to nearby integer values.

The voxelization may correspond to an operation of matching geometry information quantized through the quantization with a specific voxel present in a 3D space. The voxelization may also be performed by the geometry quantizer 310. The geometry quantizer 310 may perform octree-based voxelization based on the position information related to the points to reconstruct each point to which the quantization process has been applied.

A voxel, like a pixel which is the minimum unit having information about a 2D image/video, may mean a space for storing information related to the points present in a 3D space. Voxel is a portmanteau of volume and pixel.

A single voxel may not necessarily have (match) only one point. That is, information related to multiple points may be present in one voxel. Alternatively, information related to multiple points included in one voxel may be integrated into one piece of point information. Such adjustment may be selectively performed. When expressing one voxel by integrating information into one piece of point information in a single voxel, the position value of the center point of the voxel may be set based on the position values of the points present in the voxel, and it is necessary to perform an associated attribute transform operation. For example, the attribute transform may be adjusted to the average value of colors or reflectances of points included in the voxel or points neighboring within a specific radius from the position value of the center point of the voxel.

The octree analyzer 315 may use an octree to efficiently manage the regions/positions of voxels. An octree may be expressed by an occupancy code. For example, when a point is included within each node, the octree analyzer 315 may represent the occupancy code of the corresponding node as 1. When no point is included, the octree analyzer may represent the occupancy code of the corresponding node as 0.

The geometry encoding may correspond to an operation of performing entropy coding on the occupancy code. The geometry encoding may be performed by the geometry encoder 325. The geometry encoder 325 may perform entropy coding on the occupancy code. The generated occupancy code may be encoded immediately, or may be encoded through intra/inter coding to increase compression efficiency. The reception device 20 may reconstruct the octree based on the occupancy code.

For a specific region where there are no or very few points, voxelizing the entire region may be inefficient. That is, for a specific region where almost no points are present, it may not be necessary to construct the entire octree. In such a case, an early termination scheme may be required.

For a specific region (a specific region that does not correspond to a leaf node), instead of dividing a node corresponding to the specific region (a specific node) into eight sub-nodes (child nodes), the point cloud encoding device 300 may directly transmit the positions of points only for that specific region, or reconstruct the positions of points within the specific region on a voxel basis using a surface model.

A mode for directly transmitting the position of each point for a specific node may be a direct mode. The point cloud encoding device 300 may check whether conditions for enabling the direct mode are satisfied.

The conditions for enabling the direct mode may include: 1) the direct mode use option must be activated, 2) the specific node does not correspond to a leaf node, 3) points fewer than or equal to a threshold must be present within the specific node, and 4) the total number of points to be directly transmitted does not exceed a threshold.

When all the above conditions are satisfied, the point cloud encoding device 300 may transmit the position values of the points for the specific node by directly entropy coding the same through the geometry encoder 325.

The mode for reconstructing the position of a point within a specific region on a voxel basis using a surface model may be a trisoup mode. The trisoup mode may be performed by the approximator 320. The approximator 320 may determine a specific level of the octree, and reconstruct, from the determined specific level, the positions of points within the node region on a voxel basis using a surface model.

The point cloud encoding device 300 may selectively apply the trisoup mode. Specifically, when using the trisoup mode, the point cloud encoding device 300 may designate a level (a specific level) to which the trisoup mode will be applied. For example, when the designated specific level is equal to the depth (d) of the octree, the trisoup mode may not be applied. That is, the designated specific level must be less than the depth of the octree.

The 3D cubic region of nodes at the designated specific level is called a block, and one block may include one or more voxels. A block or voxel may also correspond to a brick. Each block may have 12 edges, and the approximator 320 may check whether each edge is adjacent to a voxel having a point (occupied voxel). Each edge may be adjacent to several occupied voxels. A specific position of an edge adjacent to a voxel is called a vertex. When several occupied voxels are adjacent to one edge, the approximator 320 may determine the average position of the corresponding positions as a vertex.

When there is a vertex, the point cloud encoding device 300 may entropy code the starting point (x, y, z) of the edge, the direction vector (△x, △y, △z) of the edge, and the position values of the vertex (relative position values within the edge) through the geometry encoder 325.

The geometry reconstruction may correspond to an operation of generating reconstructed geometry by reconstructing the octree and/or the approximated octree. The geometry reconstruction may be performed by the reconstructor 330. The reconstructor 330 may perform the geometry reconstruction through triangle reconstruction, up-sampling, voxelization process, and the like.

When the trisoup mode is applied in the approximator 320, the reconstructor 330 may reconstruct a triangle based on the starting point of the edge, the direction vector of the edge, and the position value of the vertex. The reconstructor 330 may perform the upsampling operaton to add points in the middle along the edges of the triangle and perform voxelization. The reconstructor 330 may generate additional points based on an upsampling factor and the width of the block. These points may be referred to as refined vertices. The reconstructor 330 may voxelize the refined vertices, and the point cloud encoding device 300 may perform attribute coding based on the voxelized position values.

According to embodiments, the geometry encoder 325 may increase compression efficiency by applying context adaptive arithmetic coding. The geometry encoder 325 may directly entropy code the occupancy code using an arithmetic code. According to embodiments, the geometry encoder 325 may adaptively perform encoding based on whether surrounding neighbor nodes are occupied (intra coding) or may adaptively perform encoding based on the occupancy code of a previous frame (inter coding). Here, the frame may refer to a set of point cloud data generated at the same time. Since intra coding and inter coding are optional processes, they may be skipped.

Compression efficiency may vary depending on how many neighbor nodes are referenced. Increase in bits may complicate the encoding operation, but compression efficiency may increase by making them biased to one side. For example, when a 3-bit context is given, it may need to be divided inpt 23 = 8 parts to be coded. The parts divided for coding may affect the complexity of implementation. Accordingly, it is necessary to balance the efficiency of compression and the level of complexity.

### Attribute Coding

Attribute coding may correspond to an operation of coding attribute information based on restored (reconstructed) geometry and geometry (source geometry) before coordinate transform. Since attributes may be dependent on geometry, the reconstructed geometry may be utilized for attribute coding.

As described above, the attributes may include color and reflectance. The same attribute coding method may be applied to information or parameters included in an attribute. Color has three elements and reflectance has one element. Each element may be processed independently.

Attribute coding may include color transform, attribute transform, prediction transform, lifting transform, RAHT transform, attribute quantization, and attribute encoding. The prediction transform, lifting transform, and RAHT transform may be used selectively, or a combination of one or more thereof may be used.

The color transform may correspond to an operation of transforming the format of color within an attribute into another format. The color transform may be performed by the color transformer 335. That is, the color transformer 335 may transform the color within the attribute. For example, the color transformer 335 may perform a coding operation of transforming color within an attribute from RGB to YCbCr. According to embodiments, the operation of the color transformer 335, that is, the color transform, may be optionally applied depending on the color value included in the attribute.

As described above, when one or more points are present in one voxel, the position values of points present within the voxel may be set to the center point of the voxel in order to represent the points by integrating the points into one piece of point information for the voxel. Accordingly, an operation of transforming values of attributes associated with the points may be required. Also, the attribute transform may be performed even when the trisoup mode is performed.

The attribute transform may correspond to an operation of transforming an attribute based on a position where geometry coding is not performed and/or reconstructed geometry. For example, the attribute transform may correspond to an operation of transforming an attribute possessed by a point at a corresponding position based on the position of the point included in the voxel. The attribute transform may be performed by the attribute transformer 340.

The attribute transformer 340 may calculate the average of attribute values of points (neighbor points) neighboring within a specific radius and the center position value of the voxel. Alternatively, the attribute transformer 340 may apply weights according to the distance from the center position to the attribute values and calculate the average of the weighted attribute values. In this case, each voxel has a position and a calculated attribute value.

The prediction transform may correspond to an operation of predicting the value of an attribute of the current point based on the values of the attribute of one or more points (neighbor points) neighboring the current point (a point corresponding to the target of prediction). The prediction transform may be performed by the level of detail (LOD) generator 350.

Prediction transform is a method to which an LOD transform technique is applied, and the LOD generator 350 may calculate and set the LOD value of each point based on the LOD distance of each point. Points at the lowest LOD may be sparsely distributed, and points at the highest LOD may be densely distributed. That is, as the LOD increases, the spacing (or distance) between points may become shorter.

The points present within the point cloud may be separated by LOD, and the configuration of points by LOD may include points belonging to a lower LOD than the target LOD. For example, the configuration of points having LOD level 2 may include all points belonging to LOD level 1 and LOD level 2. Points may be rearranged by LOD, and a higher LOD may include points belonging to a lower LOD.

The LOD generator 350 may generate a predictor for each point for prediction transform. Accordingly, when there are N points, N predictors may be generated. The predictor may calculate and set a weight (= 1/distance) based on the LOD value for each point, indexing information about neighbor points, and distances from the neighbor points. Here, the neighbor points may be points present within a distance from the current point set for each LOD.

Also, the predictor may multiply the attribute values of neighbor points by a "set weight value" and set the average of the attribute values multiplied by the weight value as the predicted attribute value of the current point. Attribute quantization may be performed on a residual attribute value obtained by subtracting the predicted attribute value of the current point from the attribute value of the current point.

The lifting transform, like the prediction transform, may correspond to an operation of reconstructing points into a set of detail levels through LOD generation. The lifting transform may be performed by the lifter 355. The lifting transform may include generating a predictor for each point, setting a calculated LOD in the predictor, registering neighbor points, and setting weights according to the distances between the current point and the neighbor points.

The RAHT transform may correspond to a method of predicting attribute information related to nodes at a higher level based on the attribute information related to nodes at a lower level in the octree. That is, the RAHT transform may correspond to a method for attribute information intra coding through an octree backward scan. The RAHT transform may be performed by the RAHT transformer 345.

The RAHT transformer 345 may perform the RAHT transform up to the root node while performing scanning from the voxel to the entire region and combining (merging) the voxel into a larger block in each step. The RAHT transformer 345 performs the RAHT transform only for occupied nodes. Accordingly, for an empty node that is not occupied, the RAHT transform may be performed with the node of the next upper level.

The attribute quantization may correspond to an operation of quantizing attributes output from the RAHT transformer 345, the LOD generator 350, and/or the lifter 355. The attribute quantization may be performed by the attribute quantizer 360. The attribute encoding may correspond to an operation of encoding the quantized attribute and outputting an attribute bitstream. The attribute encoding process may be performed by the attribute encoder 365.

For example, when the predicted attribute value of the current point is calculated by the LOD generator 350, the attribute quantizer 360 may quantize the residual attribute value obtained by subtracting the predicted attribute value of the current point from the attribute value of the current point.

If there are no neighbor points in the predictor of each point, the attribute encoder 365 may directly entropy code the attribute value (non-quantized attribute value) of the current point. Conversely, if there are neighbor points in the predictor of the current points, the attribute encoder 365 may entropy encode the quantized residual attribute value.

As another example, when a value obtained by multiplying the attribute value updated through a lift update operation by the weight updated (stored in QW) through a lift prediction operation is output from the lifter 360, the attribute quantizer 360 may quantize the result (i.e., the output value), and the attribute encoder 365 may entropy encode the quantized value.

### Overview of Point Cloud Decoding Device

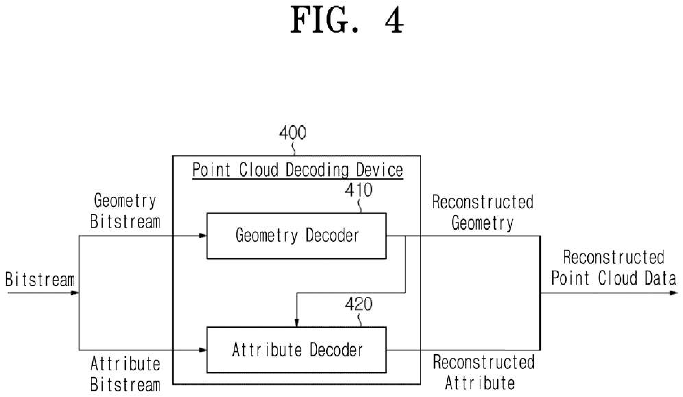

FIG. 4 illustrates an example of a point cloud decoding device 400 according to an embodiment of the present disclosure. The point cloud decoding device 400 of FIG. 4 may correspond to the decoder 23 of FIG. 1 in configuration and function.

The point cloud decoding device 400 may perform a decoding operation based on data (bitstreams) transmitted from the transmission device 10. The decoding operation may include reconstructing (decoding) a point cloud video by performing operations corresponding to the encoding operations described above on the bitstreams.

As illustrated in FIG. 4, the decoding operation may include geometry decoding and attribute decoding. The geometry decoding may be performed by the geometry decoder 410, and the attribute decoding may be performed by the attribute decoder 420. That is, the point cloud decoding device 400 may include a geometry decoder 410 and an attribute decoder 420.

The geometry decoder 410 may reconstruct geometry from a geometry bitstream, and the attribute decoder 420 may reconstruct attributes based on the reconstructed geometry and an attribute bitstream. In addition, the point cloud decoding device 400 may reconstruct a 3D point cloud video (point cloud data) based on position information according to the reconstructed geometry and attribute information according to the reconstructed attributes.

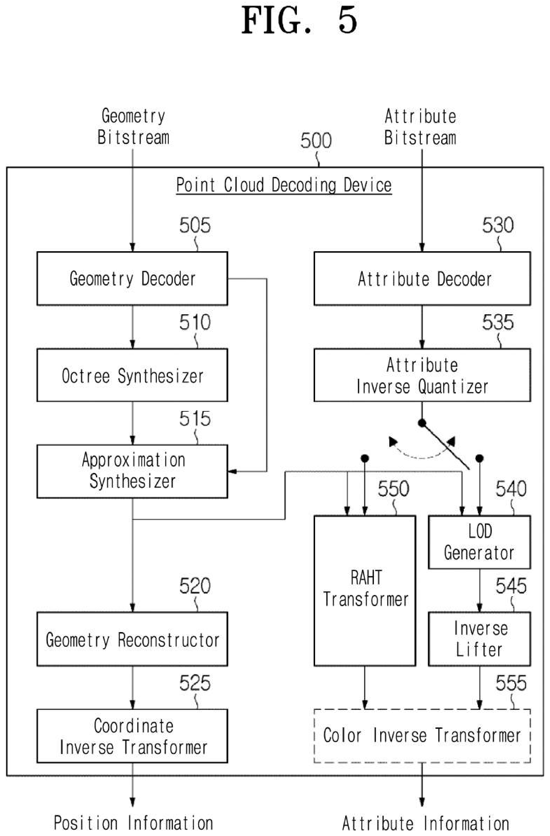

FIG. 5 illustrates a detailed example of a point cloud decoding device 500 according to another embodiment of the present disclosure. As illustrated in FIG. 5, the point cloud decoding device 500 may include a geometry decoder 505, an octree synthesizer 510, an approximation synthesizer 515, a geometry reconstructor 520, a coordinate inverse transformer 525, an attribute decoder 530, an attribute inverse quantizer 535, an RAHT transformer 550, an LOD generator 540, an inverse lifter 545, and/or a color inverse transformer 555.

The geometry decoder 505, the octree synthesizer 510, the approximation synthesizer 515, the geometry reconstructor 520, and the coordinate inverse transformer 550 may perform geometry decoding. The geometry decoding may be performed as a reverse process of the geometry coding described in FIGS. 1 to 3. The geometry decoding may include direct coding and trisoup geometry decoding. The direct coding and trisoup geometry decoding may be selectively applied.

The geometry decoder 505 may decode the received geometry bitstream based on arithmetic coding. The operation of the geometry decoder 505 may correspond to the reverse process of the operation performed by the geometry encoder 325.

The octree synthesizer 510 may generate an octree by obtaining an occupancy code from the decoded geometry bitstream (or information about geometry secured as a result of decoding). The operation of the octree synthesizer 510 may correspond to the reverse process of the operation performed by the octree analyzer 315.

When trisoup geometry encoding is applied, the approximation synthesizer 515 may synthesize a surface based on the decoded geometry and/or the generated octree.

The geometry reconstructor 520 may reconstruct geometry based on the surface and the decoded geometry. When direct coding is applied, the geometry reconstructor 520 may directly retrieve and add position information about the points to which direct coding is applied. Also, when trisoup geometry encoding is applied, the geometry reconstructor 520 may reconstruct the geometry by performing reconstruction operations, such as triangle reconstruction, up-sampling, and voxelization. The reconstructed geometry may include a point cloud picture or frame that does not include attributes.

The coordinate inverse transformer 550 may acquire positions of points by transforming the coordinate system based on the reconstructed geometry. For example, the coordinate inverse transformer 550 may inversely transform the positions of points from a 3D space (e.g., a 3D space represented by an X-axis, Y-axis, and Z-axis coordinate system) into position information in a global spatial coordinate system.

The attribute decoder 530, the attribute inverse quantizer 535, the RAHT transformer 530, the LOD generator 540, the inverse lifter 545, and/or the color inverse transformer 550 may perform attribute decoding. The attribute decoding may include RAHT transform decoding, prediction transform decoding, and lifting transform decoding. The three types of decoding mentioned above may be used selectively, or a combination of one or more thereof may be used.

The attribute decoder 530 may decode the attribute bitstream based on arithmetic coding. For example, in the case where the attribute value of the current point has been directly entropy encoded because no neighbor points are present for the predictor of each point, the attribute decoder 530 may decode the attribute value (non-quantized attribute value) of the current point. As another example, in the case where neighbor points are present for the predictor of the current points and the quantized residual attribute value has been entropy encoded, the attribute decoder 530 may decode the quantized residual attribute value.

The attribute inverse quantizer 535 may inversely quantize the decoded attribute bitstream or information about attributes secured as a result of decoding, and output inversely quantized attributes (or attribute values). For example, when a quantized residual attribute value is output from the attribute decoder 530, the attribute inverse quantizer 535 may inversely quantize the quantized residual attribute value and output a residual attribute value. The inverse quantization may be selectively applied based on whether the attribute has been encoded by the point cloud encoding device 300. That is, in the case where the attribute value of the current point has been directly encoded because there are not neighbor points for the predictor of each point, the attribute decoder 530 may output the non-quantized attribute value of the current point, and the attribute encoding may be skipped.

The RAHT transformer 550, the LOD generator 540, and/or the inverse lifter 545 may process the reconstructed geometry and inversely quantized attributes. The RAHT transformer 550, the LOD generator 540, and/or the inverse lifter 545 may selectively perform decoding operations corresponding to the encoding operations of the point cloud encoding device 300.

The color inverse transformer 555 may perform inverse transform coding to inversely transform color values (or textures) included in the decoded attributes. The operation of the color inverse transformer 555 may be selectively performed based on whether the color transformer 335 has operated.

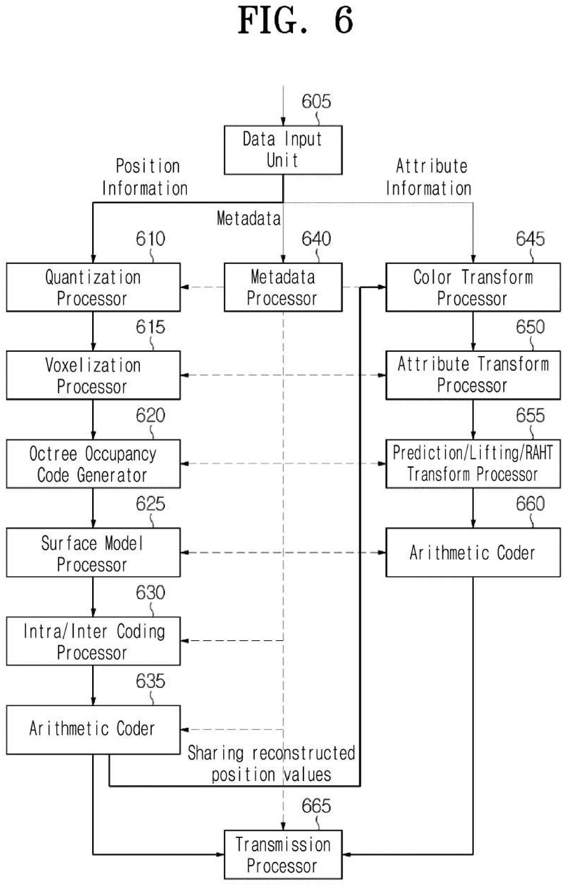

FIG. 6 illustrates another example of a transmission device according to embodiments of the present disclosure. As illustrated in FIG. 6, the transmission device may include a data input unit 605, a quantization processor 610, a voxelization processor 615, an octree occupancy code generator 620, a surface model processor 625, an intra/inter coding processor 630, an arithmetic coder 635, a metadata processor 640, a color transform processor 645, an attribute transform processor 650, a prediction/lifting/RAHT transform processor 655, an arithmetic coder 660, and a transmission processor 665.

The function of the data input unit 605 may correspond to the acquisition operation performed by the acquirer 11 of FIG. 1. That is, the data input unit 605 may acquire a point cloud video and generate point cloud data for multiple points. Geometry information (position information) in the point cloud data may be generated in the form of a geometry bitstream through the quantization processor 610, the voxelization processor 615, the octree occupancy code generator 620, the surface model processor 625, the intra/inter coding processor 630, and the arithmetic coder 635. Attribute information in the point cloud data may be generated in the form of an attribute bitstream through the color transform processor 645, the attribute transform processor 650, the prediction/lifting/RAHT transform processor 655, and the arithmetic coder 660. The geometry bitstream, attribute bitstream, and/or metadata bitstream may be transmitted to a reception device through processing by the transmission processor 665.

Specifically, the function of the quantization processor 610 may correspond to the quantization operation performed by the geometry quantizer 310 of FIG. 3 and/or the function of the coordinate transformer 305. The function of the voxelization processor 615 may correspond to the voxelization operation performed by the geometry quantizer 310 of FIG. 3, and the function of the octree occupancy code generator 620 may correspond to the function performed by the octree analyzer 315 of FIG. 3. The function of the surface model processor 625 may correspond to the function performed by the approximator 320 of FIG. 3, and the functions of the intra/inter coding processor 630 and the arithmetic coder 635 may correspond to the functions performed by the geometry encoder 325 of FIG. 3. The function of the metadata processor 640 may correspond to the function of the metadata processor described in FIG. 1.

Also, the function of the color transform processor 645 may correspond to the function performed by the color transformer 335 of FIG. 3, and the function of the attribute transform processor 650 may correspond to the function performed by the attribute transformer 340 of FIG. 3. The function of the prediction/lifting/RAHT transform processor 655 may correspond to the functions performed by the RAHT transformer 345, the LOD generator 350, and the lifter 355 of FIG. 3, and the function of the arithmetic coder 660 may correspond to the function of the attribute encoder 365 of FIG. 3. The function of the transmission processor 665 may correspond to the functions performed by the transmitter 14 and/or the encapsulation processor 13 of FIG. 1.

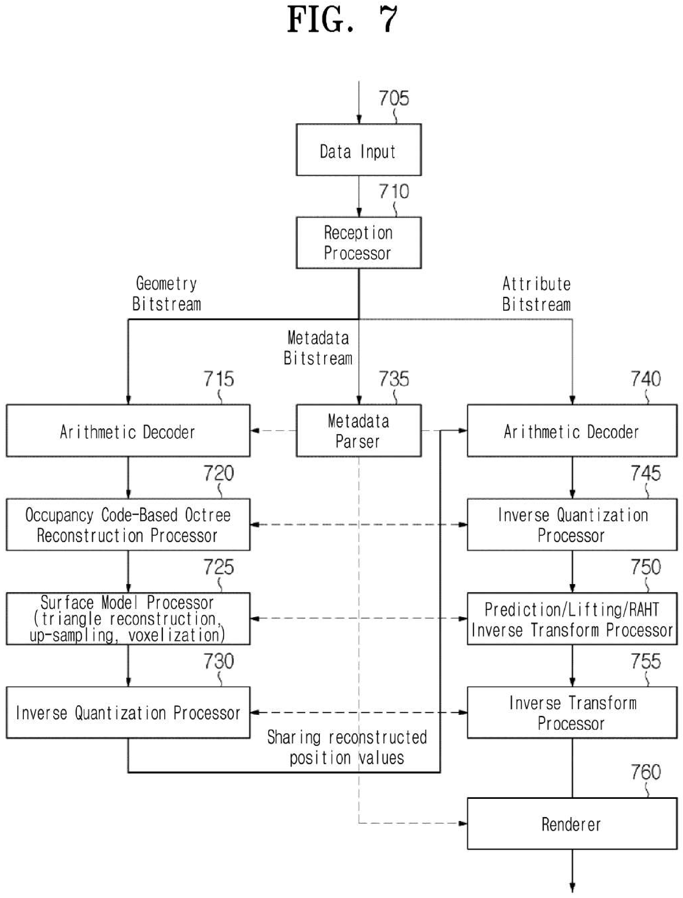

FIG. 7 illustrates another example of a reception device according to embodiments of the present disclosure. As illustrated in FIG. 7, the reception device may include a receiver 705, a reception processor 710, an arithmetic decoder 715, a metadata parser 735, an occupancy code-based octree reconstruction processor 720, a surface model processor 725, an inverse quantization processor 730, an arithmetic decoder 740, an inverse quantization processor 745, a prediction/lifting/RAHT inverse transform processor 750, a color inverse transform processor 755, and a renderer 760.

The function of the receiver 705 may correspond to the function performed by the receiver 21 of FIG. 1, and the function of the reception processor 710 may correspond to the function performed by the decapsulation processor 22 of FIG. 1. That is, the receiver 705 may receive a bitstream from the transmission processor 765, and the reception processor 710 may extract a geometry bitstream, an attribute bitstream, and/or a metadata bitstream through decapsulation processing. The geometry bitstream may be generated as reconstructed (restored) position values (position information) through the arithmetic decoder 715, the occupancy code-based octree reconstruction processor 720, the surface model processor 725, and the inverse quantization processor 730. The attribute bitstream may be generated as reconstructed attribute values through the arithmetic decoder 740, the inverse quantization processor 745, the prediction/lifting/RAHT inverse transform processor 750, and the color inverse transform processor 755. The metadata bitstream may be generated as reconstructed metadata (or metadata information) through the metadata parser 735. The position values, attribute values, and/or metadata may be rendered by the renderer 760 to provide the user with experiences such as VR/AR/MR/self-driving.

Specifically, the function of the arithmetic decoder 715 may correspond to the function performed by the geometry decoder 505 of FIG. 5, and the function of the occupancy code-based octree reconstruction processor 720 may correspond to the function performed by the octree synthesizer 510 of FIG. 5. The function of the surface model processor 725 may correspond to the function performed by the approximation synthesizer of FIG. 5, and the function of the inverse quantization processor 730 may correspond to the functions performed by the geometry reconstructor 520 and/or the coordinate inverse transformer 525 of FIG. 5. The function of the metadata parser 735 may correspond to the function performed by the metadata parser described in FIG. 1.

Also, the function of the arithmetic decoder 740 may correspond to the function performed by the attribute decoder 530 of FIG. 5, and the function of the inverse quantization processor 745 may correspond to the function performed by the attribute inverse quantizer 535 of FIG. 5. The function of the prediction/lifting/RAHT inverse transform processor 750 may correspond to the functions performed by the RAHT transformer 550, the LOD generator 540, and the inverse lifter 545 of FIG. 5. The function of the color inverse transform processor 755 may correspond to the function performed by the color inverse transformer 555 of FIG. 5.

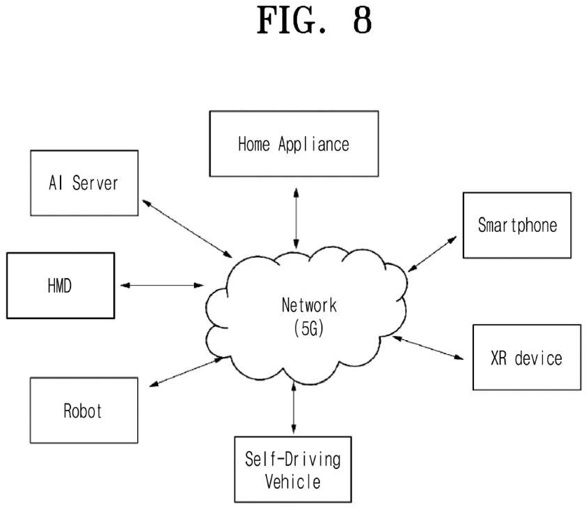

FIG. 8 illustrates an example of a structure interoperable with a point cloud data transmission/reception method/device according to embodiments of the present disclosure.

The structure of FIG. 8 represents a configuration in which at least one of a server (AI server), a robot, a self-driving vehicle, an XR device, a smartphone, a home appliance, and/or an HMD is connected to a cloud network. The robot, the self-driving vehicle, the XR device, the smartphone, or the home appliance may be referred to as a device. Further, the XR device may correspond to a point cloud data (PCC) device according to embodiments or may be operatively connected to the PCC device.

The cloud network may represent a network that constitutes part of the cloud computing infrastructure or is present in the cloud computing infrastructure. Here, the cloud network may be configured using a 3G network, 4G or Long Term Evolution (LTE) network, or a 5G network.

The server may be connected to at least one of the robot, the self-driving vehicle, the XR device, the smartphone, the home appliance, and/or the HMD over the cloud network and may assist in at least a part of the processing of the connected devices.

The HMD may represent one of the implementation types of the XR device and/or the PCC device according to the embodiments. The HMD type device according to the embodiments may include a communication unit, a control unit, a memory, an I/O unit, a sensor unit, and a power supply unit.$\left〈PCC+XR\right〉$

The XR/PCC device may employ PCC technology and/or XR technology, and may be implemented as an HMD, an HUD provided in a vehicle, a television, a mobile phone, a smartphone, a computer, a wearable device, a home appliance, a digital signage, a vehicle, a stationary robot, or a mobile robot.

The XR/PCC device may analyze 3D point cloud data or image data acquired through various sensors or from an external device and generate position (geometry) data and attribute data about 3D points. Thereby, the XR/PCC device may acquire information about the surrounding space or a real object, and render and output an XR object. For example, the XR/PCC device may match an XR object including auxiliary information about a recognized object with the recognized object and output the matched XR object.$\left〈PCC+XR+Mobile phone\right〉$

The XR/PCC device may be implemented as a mobile phone by applying PCC technology. The mobile phone may decode and display point cloud content based on the PCC technology.$\left〈PCC+Self-driving+XR\right〉$

The self-driving vehicle may be implemented as a mobile robot, a vehicle, an unmanned aerial vehicle, or the like by applying the PCC technology and the XR technology. The self-driving vehicle to which the XR/PCC technology is applied may represent a self-driving vehicle provided with means for providing an XR image, or a self-driving vehicle that is a target of control/interaction in the XR image. In particular, the self-driving vehicle which is a target of control/interaction in the XR image may be distinguished from the XR device and may be operatively connected thereto.

The self-driving vehicle having means for providing an XR/PCC image may acquire sensor information from sensors including a camera, and output the generated XR/PCC image based on the acquired sensor information. For example, the self-driving vehicle may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle may output XR/PCC objects corresponding to objects such as a road, another vehicle, a traffic light, a traffic sign, a two-wheeled vehicle, a pedestrian, and a building.

The VR technology, the AR technology, the MR technology and/or the PCC technology according to the embodiments are applicable to various devices. In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, for example, a hologram service is an application of the aforementioned MR technology. VR, AR, and MR technologies may be collectively referred to as XR technology.

### Spatial Partitioning

Point cloud data (i.e., G-PCC data) may represent volumetric encoding of a point cloud composed of a sequence of frames (point cloud frames). Each point cloud frame may include the number of points, positions of the points, and attributes of the points. The number of points, positions of the points, and attributes of the points may vary from frame to frame. Each point cloud frame may represent a set of 3D points specified by Cartesian coordinates (x, y, z) of 3D points and zero or more attributes at a particular time instance. Here, the Cartesian coordinates (x, y, z) of 3D points may be positions or geometry.

According to embodiments of the present disclosure, a spatial partitioning operation of partitioning point cloud data into one or more 3D blocks may be further performed before encoding the point cloud data. A 3D block may represent the entire region or a partial region of the 3D space occupied by the point cloud data. A 3D block may represent one or more of a tile group, a tile, a slice, a coding unit (CU), a prediction unit (PU), or a transform unit (TU).

A tile corresponding to a 3D block may represent the entire region or a partial region of of the 3D space occupied by point cloud data. Also, a slice corresponding to a 3D block may represent the entire region or a partial region of the 3D space occupied by the point cloud data. A tile may be partitioned into one or more slices based on the number of points included in one tile. A tile may be a group of slices having bounding box information. The bounding box information of each tile may be specified in a tile inventory (or tile parameter set (TPS). A tile may overlap with another tile within the bounding box. A slice may be a unit of data on which encoding is performed independently and may be a unit of data on which decoding is performed independently. That is, a slice may be a set of points that may be independently encoded or decoded. According to embodiments, a slice may be a series of syntax elements representing a part or all of a coded point cloud frame. Each slice may include an index for identifying the tile to which the slice belongs.

Spatially partitioned 3D blocks may each be processed independently or non-independently. For example, spatially partitioned 3D blocks may each be independently or non-independently encoded or decoded, and may each be independently or non-independently transmitted or received. In addition, spatially partitioned 3D blocks may each be independently or non-independently quantized or inversely quantized, and may each be independently or non-independently transformed or inversely transformed. Furthermore, spatially partitioned 3D blocks may each be independently or non-independently rendered. For example, encoding or decoding may be performed in units of slices or tiles. Also, quantization or inverse quantization may be performed differently for each tile or for each slice, and transform or inverse transform may be performed differently for each tile or for each slice.

By spatially partitioning point cloud data into one or more 3D blocks and processing the spatially partitioned 3D blocks independently or non-independently as described above, the process of processing 3D blocks may be performed in real time. Also, the process may be processed with low latency. In addition, random access in the 3D space occupied by point cloud data and parallel encoding or parallel decoding may be enabled, and errors may be prevented from being accumulated during the encoding or decoding operation.

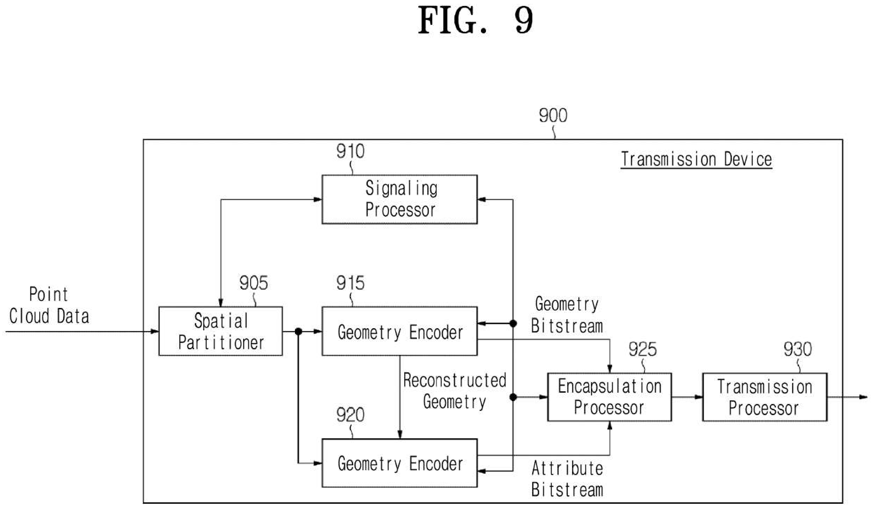

FIG. 9 is a block diagram illustrating an example of a transmission device 900 performing spatial partitioning according to embodiments of the present disclosure. As illustrated in FIG. 9, the transmission device 900 may include a spatial partitioner 905 configured to perform spatial partitioning, a signaling processor 910, a geometry encoder 915, an attribute encoder 920, an encapsulation processor 925, and/or a transmission processor 930.

The spatial partitioner 905 may perform a spatial partitioning operation of partitioning point cloud data into one or more 3D blocks based on a bounding box and/or a sub-bounding box. Through the spatial partitioning operation, point cloud data may be partitioned into one or more tiles and/or one or more slices. According to embodiments, through the spatial partitioning operation, point cloud data may be partitioned into one or more tiles, and each partitioned tile may be further partitioned into one or more slices.

FIG. 10 illustrates an example of spatially partitioning a bounding box (i.e., point cloud data) into one or more 3D blocks. As illustrated in FIG. 10, the overall bounding box of the point cloud data may be partitioned into three tiles, namely tile #0, tile #1, and tile #2. In addition, tile #0 may be further partitioned into two slices, namely slice #0 and slice #1. Also, tile #1 may be further partitioned into two slices, namely slice #2 and slice #3. Also, tile #2 may be further partitioned into slice #4.

The signaling processor 910 may generate and/or process (e.g., entropy encode) signaling information to output a bitstream for the same. Hereinafter, the bitstream output from the signaling processor (in which signaling information is encoded) is referred to as a "signaling bitstream." The signaling information may include information for spatial partitioning or information about spatial partitioning. That is, the signaling information may include information related to the spatial partitioning performed by the spatial partitioner 905.

When point cloud data is partitioned into one or more 3D blocks, information for decoding a portion of the point cloud data corresponding to a specific tile or a specific slice among the point cloud data may be required. In addition, in order to support spatial access (or partial access) to the point cloud data, information related to 3D spatial regions may be required. Here, spatial access may represent extracting from a file only a necessary portion of the entire point cloud data. The signaling information may include information for decoding a portion of the point cloud data, information related to 3D spatial regions for supporting spatial access, and the like. For example, the signaling information may include 3D bounding box information, 3D spatial region information, tile information, and/or tile inventory information.

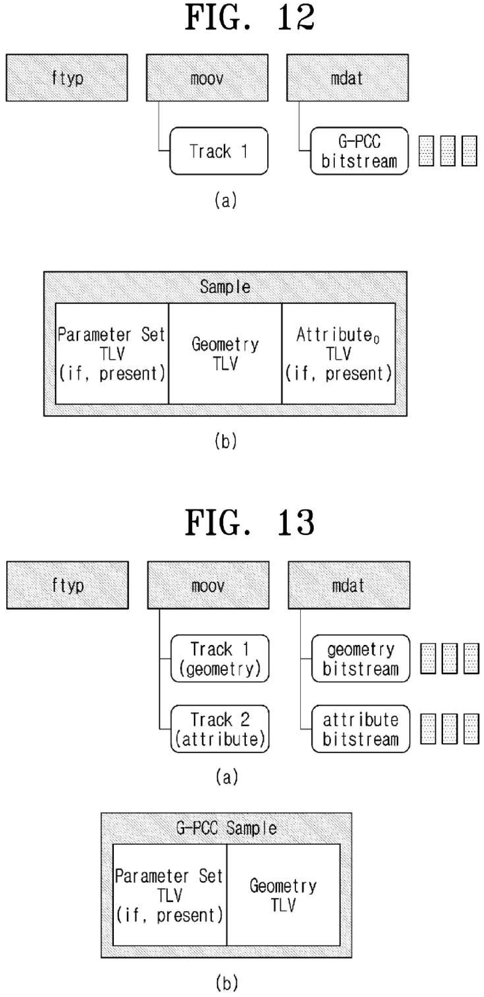

Signaling information may be provided from the spatial partitioner 905, the geometry encoder 915, the attribute encoder 920, the transmission processor 925, and/or the encapsulation processor 930. Also, the signaling processor 910 may provide feedback information fed back from the reception device 900 of FIG. 13 to the spatial partitioner 905, the geometry encoder 915, the attribute encoder 920, the transmission processor 925, and/or the encapsulation processor 930.

The signaling information may be stored and signaled in a sample within a track, a sample entry, a sample group, a track group, or a separate metadata track. According to embodiments, the signaling information may be signaled in units such as a sequence parameter set (SPS) for sequence-level signaling, a geometry parameter set (GPS) for signaling of geometry coding information, an attribute parameter set (APS) for signaling of attribute coding information, and a tile parameter set (TPS) (or tile inventory) for tile-level signaling. Also, the signaling information may be signaled in coding units such as slices or tiles.

The positions (position information) of the 3D blocks may be output to the geometry encoder 915, and the attributes (attribute information) of the 3D blocks may be output to the attribute encoder 920.

The geometry encoder 915 may construct an octree based on the position information and encode the constructed octree to output a geometry bitstream. In addition, the geometry encoder 915 may reconstruct (restore) the octree and/or the approximated octree and output the same to the attribute encoder 920. The reconstructed octree may be reconstructed geometry. The geometry encoder 915 may perform all or part of the operations performed by the coordinate transformer 305, the geometry quantizer 310, the octree analyzer 315, the approximator 320, the geometry encoder 325, and/or the reconstructor 330 of FIG. 3. According to embodiments, the geometry encoder 915 may perform all or part of the operations performed by the quantization processor 610, the voxelization processor 615, the octree occupancy code generator 620, the surface model processor 625, the intra/inter coding processor 630, and/or the arithmetic coder 635 of FIG. 6.

The attribute encoder 920 may encode attributes based on the reconstructed geometry and output an attribute bitstream. The attribute encoder 920 may perform all or part of the operations performed by the attribute transformer 340, the RAHT transformer 345, the LOD generator 350, the lifter 355, the attribute quantizer 360, the attribute encoder 365, and/or the color transformer 335 of FIG. 3. According to embodiments, the attribute encoder 920 may perform all or part of the operations performed by the attribute transform processor 650, the prediction/lifting/RAHT transform processor 655, the arithmetic coder 660, and/or the color transform processor 645 of FIG. 6.

The encapsulation processor 925 may encapsulate one or more input bitstreams into a file or a segment. For example, the encapsulation processor 925 may encapsulate the geometry bitstream, the attribute bitstream, and the signaling bitstream separately, or may multiplex and encapsulate the geometry bitstream, the attribute bitstream, and the signaling bitstream. According to embodiments, the encapsulation processor 925 may encapsulate a bitstream (G-PCC bitstream) composed of a sequence of TLV (type-length-value) structures into a file. TLV (or TLV encapsulation) structures constituting the G-PCC bitstream may include a geometry bitstream, an attribute bitstream, and a signaling bitstream. According to embodiments, the G-PCC bitstream may be generated by the encapsulation processor 925 or may be generated by the transmission processor 930. The TLV structure or TLV encapsulation structure will be described in detail later. According to embodiments, the encapsulation processor 925 may perform all or part of the operations performed by the encapsulation processor 13 of FIG. 1.

The transmission processor 930 may process the encapsulated bitstream or file/segment according to a transmission protocol. The transmission processor 930 may perform all or part of the operations performed by the transmitter 14 and transmission processor described with reference to FIG. 1, or the transmission processor 665 of FIG. 6.

FIG. 11 is a block diagram illustrating an example of a reception device 1100 according to embodiments of the present disclosure. The reception device 1100 may perform operations corresponding to the operations of the transmission device 900 that performs spatial partitioning. As illustrated in FIG. 11, the reception device 1100 may include a reception processor 1105, a decapsulation processor 1110, a signaling processor 1115, a geometry decoder 1120, an attribute encoder 1125, and/or a post-processor 1130.

The reception processor 1105 may receive a file/segment in which a G-PCC bitstream is encapsulated, the G-PCC bitstream, or a bitstream, and may perform processing according to a transmission protocol thereon. The reception processor 1105 may perform all or part of the operations performed by the receiver 21 and reception processor described with reference to FIG. 1, or the receiver 705 or reception processor 710 of FIG. 7.

The decapsulation processor 1110 may acquire a G-PCC bitstream by performing a reverse process of the operations performed by the encapsulation processor 925. The decapsulation processor 1110 may acquire a G-PCC bitstream by decapsulating a file/segment. For example, the decapsulation processor 1110 may acquire a signaling bitstream and output the same to the signaling processor 1115, may acquire a geometry bitstream and output the same to the geometry decoder 1120, and may acquire an attribute bitstream and output the same to the attribute decoder 1125. The decapsulation processor 1110 may perform all or part of the operations performed by the decapsulation processor 22 of FIG. 1 or the reception processor 710 of FIG. 7.

The signaling processor 1115 may parse and decode signaling information by performing a reverse process of the operations performed by the signaling processor 910. The signaling processor 1115 may parse and decode signaling information from the signaling bitstream. The signaling processor 1115 may provide the decoded signaling information to the geometry decoder 1120, the attribute decoder 1125, and/or the post-processor 1130.

The geometry decoder 1120 may reconstruct geometry from the geometry bitstream by performing a reverse process of the operations performed by the geometry encoder 915. The geometry decoder 1120 may reconstruct the geometry based on the signaling information (parameters related to geometry). The reconstructed geometry may be provided to the attribute decoder 1125.

The attribute decoder 1125 may reconstruct attributes from the attribute bitstream by performing a reverse process of the operations performed by the attribute encoder 920. The attribute decoder 1125 may reconstruct attributes based on the signaling information (parameters related to the attributes) and the reconstructed geometry.

The post-processor 1130 may reconstruct point cloud data based on the reconstructed geometry and the reconstructed attributes. Reconstruction of the point cloud data may be performed through a process of matching the reconstructed geometry and the reconstructed attributes with each other. According to embodiments, when the reconstructed point cloud data is in units of tiles and/or slices, the post-processor 1130 may reconstruct a bounding box of the point cloud data by performing a reverse process of the spatial partitioning of the transmission device 900 based on the signaling information. According to embodiments, when the bounding box is partitioned into multiple tiles and/or multiple slices through spatial partitioning, the post-processor 1130 may reconstruct a part of the bounding box by combining some slices and/or some tiles based on the signaling information. Here, some slices and/or some tiles used for reconstructing the bounding box may be slices and/or some tiles related to a 3D spatial region to which spatial access is desired.

### Encapsulation and Decapsulation

The TLV encapsulation structure may be generated by the transmitter, the transmission processor, and the encapsulator mentioned in the present disclosure. A G-PCC bitstream composed of TLV encapsulation structures may be transmitted to a reception device as it is, or may be encapsulated and then transmitted to the reception device. For example, the encapsulation processor 1125 may encapsulate the G-PCC bitstream composed of TLV encapsulation structures into a file/segment and transmit the same. The decapsulation processor 1110 may acquire the G-PCC bitstream by decapsulating the encapsulated file/segment.

According to embodiments, the G-PCC bitstream may be encapsulated in an ISOBMFF-based file format. In this case, the G-PCC bitstream may be stored in a single track or multiple tracks within an ISOBMFF file. Here, the single track or multiple tracks in the file may be referred to as a "track" or a "G-PCC track." The ISOBMFF-based file may be referred to as a container, a container file, a media file, a G-PCC file, or the like. Specifically, the file may include boxes and/or information that may be referred to as ftyp, moov, and mdat.

The ftyp box (file type box) may provide file type or file compatibility-related information for the corresponding file. The reception device may identify the file by referring to the ftyp box. The mdat box is also called a media data box and may include actual media data. According to embodiments, a geometry slice (or a coded geometry bitstream) and zero or more attribute slices (or coded attribute bitstreams) may be included in a sample of the mdat box in the file. Here, the sample may be referred to as a G-PCC sample. The moov box is also called a movie box and may include metadata about media data of the file. For example, the moov box may include information necessary for decoding and playing back the corresponding media data, and may include information about tracks and samples in the file. The moov box may serve as a container for all metadata. The moov box may be the box of the highest layer among metadata-related boxes.

According to embodiments, the moov box may include a trak box that provides information related to a track of a file. The trak box may include a media (mdia) box (MediaBox) that provides media information related to the corresponding track, and a track reference container (tref) box for referencing the track and a sample of the file corresponding to the track. The MediaBox may include a media information container (minf) box providing information about the corresponding media data and a handler (hdlr) box (HandlerBox) indicating the type of the stream. The minf box may include a sample table (stbl) box providing metadata related to a sample of the mdat box. The stbl box may include a sample description (stsd) box, which provides information about a coding type used and initialization information necessary for the coding type. According to embodiments, the sample description (stsd) box may include a sample entry for the track. According to embodiments, signaling information (or metadata) such as SPS, GPS, APS, and tile inventory may be included in a sample entry of the moov box or a sample of the mdat box in the file.

A G-PCC track may be defined as a volumetric visual track that carries a geometry slice (or a coded geometry bitstream) or an attribute slice (or a coded attribute bitstream), or both the geometry slice and the attribute slice. According to embodiments, a volumetric visual track may be identified by a volumetric visual media handler type 'volv' in the HandlerBox of the MediaBox and/or by a volumetric visual media header (vvhd) in the minf box of the MediaBox. The minf box may be referred to as a media information container or a media information box. The minf box may be included in the MediaBox, the MediaBox may be included in the track box, and the track box may be included in the moov box of the file. A single volumetric visual track or multiple volumetric visual tracks may be present in a file.

### Sample Group

The encapsulation processor mentioned in the present disclosure may generate a sample group by grouping one or more samples. The encapsulation processor, metadata processor, or signaling processor mentioned in the present disclosure may signal signaling information associated with the sample group to a sample, sample group, or sample entry. That is, sample group information associated with the sample group may be added to a sample, sample group, or sample entry. The sample group information may include 3D bounding box sample group information, 3D region sample group information, 3D tile sample group information, and 3D tile inventory sample group information.

### Sample Entry

FIG. 12 illustrates an ISOBMFF-based file including a single track. FIG. 12(a) illustrates an example of a layout of an ISOBMFF-based file including a single track, and FIG. 12(b) illustrates an example of a sample structure of an mdat box when a G-PCC bitstream is stored in a single track of the file. FIG. 13 illustrates an ISOBMFF-based file including multiple tracks. FIG. 13(a) illustrates an example of a layout of an ISOBMFF-based file including multiple tracks, and FIG. 13(b) illustrates an example of a sample structure of an mdat box when a G-PCC bitstream is stored in a single track of the file.

The stsd box (SampleDescriptionBox) included in the moov box of the file may include a sample entry for a single track storing a G-PCC bitstream. An SPS, GPS, APS, or tile inventory may be included in the sample entry of the moov box or a sample of the mdat box in the file. In addition, a geometry slice and zero or more attribute slices may be included in a sample of the mdat box in the file. When the G-PCC bitstream is stored in a single track of the file, each sample may include multiple G-PCC components. That is, each sample may include one or more TLV encapsulation structures.

As illustrated in FIG. 13(b), a sample may include TLV encapsulation structures including a geometry slice. Also, a sample may include TLV encapsulation structures including one or more parameter sets. Further, a sample may include TLV encapsulation structures including one or more attribute slices.

As illustrated in FIG. 13(a), when a G-PCC bitstream is carried in multiple tracks of an ISOBMFF-based file, each geometry slice or attribute slice may be mapped to an individual track. For example, a geometry slice may be mapped to track 1, and an attribute slice may be mapped to track 2. The track carrying the geometry slice (track 1) may be referred to as a geometry track or a G-PCC geometry track, and the track carrying the attribute slice (track 2) may be referred to as an attribute track or a G-PCC attribute track. The geometry track may be defined as a volumetric visual track carrying a geometry slice, and the attribute track may be defined as a volumetric visual track carrying an attribute slice.

A track carrying a part of a G-PCC bitstream including both a geometry slice and an attribute slice may be referred to as a multiplexed track. When the geometry slice and the attribute slice are stored in separate tracks, each sample in a track may include at least one TLV encapsulation structure carrying data of a single G-PCC component. In this case, each sample does not include both geometry and attributes, and also may not include multiple attributes. Multi-track encapsulation of the G-PCC bitstream may enable a G-PCC player to effectively access one of the G-PCC components.

When G-PCC data is carried in samples for which the random access feature is supported, it may include a G-PCC parameter set sample group to provide more description for parameter sets. The design of the sample group may be as follows:
1. To describe a parameter set of a specific type, a parameter set sample group entry 'gpsg' may be used. In this way, at most, a sample group description box of type 'gpsg' may have only as many entries as the number of different parameter set types that may be carried (i.e., an entry for each of the SPS, GPS, and APS types). Parameter sets may still be carried in either sample entry and/or in samples. The sample group may describe parameter sets carried in the samples.
2. There may be multiple sample-to-group boxes 'sgbp' of type 'gpsg'. Each 'sgbp' of grouping type 'gpsg' shall be differentiated by its group_type_parameter to identify which type of parameter set the mapping is for.
3. The 'sgbp' of grouping type 'gpsg' may map samples to particular parameter sets. In this case, only samples that contain parameters of the particular type may be allowed to have a non-zero group_description_index. Any sample that does not contain the parameter set or that contains a parameter set of a different type may be constrained to have group_description_index equal to 0.
4. For normal playback operations such as playback without random access, parameter set sample group boxes (e.g., sample group description box and sample-to-group boxes of grouping type 'gpsg') may be ignored.
5. For random access from a particular sample Sample X, in the presence of parameter set sample group boxes, the file parser/player may be constrained to identify samples containing each of the parameter set types (Sample X itself or samples preceding Sample X, which is the random access starting point) and extract those parameter sets. The extracted parameter sets may be included in Sample X prior to sending it for decoding.
6. It may be constrained that when parameter set sample group boxes are present, there shall be no nested parameter set referencing, such that after a former parameter set PS_A is updated by a new occurrence of parameter set PS_B in Sample X, there shall be no samples that follow Sample X in decoding order and refer to PS_A.
7. When parameter set sample group boxes are present, for a parameter set of a particular parameter set type (i.e., SPS, GPS, and/or APS) that is carried in Sample X and referred to by multiple samples, Sample X may be constrained to be mapped in a sample-to-group box of grouping type 'gpsg' with group_type_parameter of the parameter set type.

The above design may raise the following issue and may be improved in two aspects.

The constraint reviewed in the point 6 above is intended to facilitate random access. That is, when random access occurs, the decoder may easily find samples containing the necessary parameter sets by finding the nearest samples preceding the random access point sample in decoding order from the sample-to-group box. On the other hand, in some situations, this may be too restrictive. In certain cases, the decoder may have no problem finding the necessary parameter sets up to the first sync sample preceding the random access point sample in decoding/bitstream order.

It may be beneficial to have another mode capable of locating samples that contain necessary parameter sets. The present disclosure suggests a method to harmonize the conventional design with the newly proposed method.

To address the above issue, the present disclosure proposes the following Configuration 1 to Configuration 4. The configurations may be applied individually, or two or more thereof may be applied in combination.

Configuration 1) A new syntax element may be signaled to specify the mode of how the parameter set sample group entry is used. This syntax element may be referred to as "mode" or "mode information" in the present disclosure. In the present disclosure, the mode may have a value of 0 or 1. More generally, in the present disclosure, 0 may be expressed as a first value and 1 as a second value.

Mode equal to 0 may mean that a sample mapped to the entry (i.e., in the sample-to-group box of grouping type 'gpsg') contains a parameter set of the same type as the grouping_type_parameter of the sample-to-group box.

Mode equal to 1 may mean that a sample mapped to the entry (i.e., in the sample-to-group box of grouping type 'gpsg') refers to the parameter set contained in the sample corresponding to the G-PCC parameter set sample group entry.

Configuration 2) When mode is equal to 1, the following information may be signaled.

Offset of the corresponding sample relative to the sync sample.

Number of parameter sets that the corresponding sample contains.

A flag indicating whether the type of each parameter set and the offset of the parameter set are present within the sample, in terms of the G-PCC unit.

Type of parameter set that is contained in the corresponding sample.

Offset of the parameter set within the sample, in terms of the G-PCC unit.

Configuration 3) According to the present disclosure, at least one of the following constraints may be applied.

All G-PCC parameter set sample group entries in the same sample group description box may be constrained to have the same value of mode.

For a G-PCC parameter set sample group entry with mode 1, the number of sample-to-group boxes of grouping type 'gpsg' may be constrained not to be greater than the number of unique values of parameter_set_type. Here, the sample-to-group boxes of grouping type 'gpsg' may contain samples mapped to the sample group entry.

For a G-PCC parameter set sample group entry with mode 1, the value of the syntax element specifying the number of parameter sets in the sample may be constrained to be less than or equal to the number of parameter sets in that sample.

For a G-PCC parameter set sample group entry with mode 1, it may be constrained such that there shall be no two parameter set offset values, if present, that are the same.

Configuration 4) Alternatively, the signaling of the mode may not be used. Instead, the signaling of Configuration 2 may be applied by default.

Hereinafter, various embodiments of the present disclosure applying at least one of Configuration 1 to Configuration 4 will be described.

### Embodiment 1)

This embodiment may be implemented by a combination of Configuration 1 and Configuration 2 above.

The G-PCC parameter set sample group according to this embodiment may be defined as shown in Table 1.

**[Table 1]**

| | |
|---|---|
| Group Types: | 'gpsg' |
| Container: | Sample Group Description Box ('sgpd') |
| Mandatory: | No |
| Quantity: | Zero or more |

A G-PCC parameter set sample group entry may define parameter set information for all samples that refer to shared G-PCC parameter sets. When multiple instances of the SampleToGroupBox with grouping_type equal to 'gpsg' are present, the versions of all SampleToGroupBoxes shall be set to 1. The G-PCC parameter set sample group entry may provide information that may help the decoder find a parameter set that is needed to decode a sample. A G-PCC parameter set sample group entry with mode 0 may mean that a sample mapped to the entry (i.e., in the SampleToGroupBox with grouping type 'gpsg') contains a parameter set of the type equal to the grouping_type_parameter of the SampleToGroupBox. A G-PCC parameter set sample group entry with mode 1 may mean that a sample mapped to the entry (i.e., in the SampleToGroupBox with grouping type 'gpsg') refers to a parameter set that is contained in the sample corresponding to the G-PCC parameter set sample group entry.

When sample group description with grouping _type equal to 'gpsg' and mode equal to 0 is present, the following constraints may be applied.
- When parameter set PS_A is updated by a new occurrence of parameter set PS_B in sample X, there shall be no sample that refers to parameter set PS_A and follows sample X in decoding order.
- For a parameter set with a particular parameter set type (e.g., SPS, GPS, or APS) that is carried in sample X and referred to by multiple samples, sample X shall be mapped in a sample-to-group with grouping type 'gpsg' and with a unique group _type_parameter, based on the type of parameter set present in that sample.
- Any sample that does not contain a parameter set or that contains a parameter set of a different type shall have group_description_index equal to 0.

When a sample group description with grouping _type equal to 'gpsg' and mode equal to 0 is present, for random access from a particular sample Sample X, the file parser/player shall identify samples preceding the random access starting point Sample X (which may be Sample X itself or samples that contain each of the parameter set types) and extract those parameter sets so that they can be included in sample X prior to sending it for decoding.

When a sample group description with grouping _type equal to 'gpsg' and mode equal to 1 is present, for random access from a particular sample sampleX, the file parser/player shall identify the sample group entry to which Sample X is mapped for each parameter type that is needed to decode sample X, use the sample offset information and parameter set offset information, if present, in the sample group entry to locate the sample containing the required parameter set, and extract the parameter set such that it can be included in Sample X prior to transmission for decoding.

Further, according to this embodiment, at least one of the following constraints may be applied.

All G-PCC parameter set sample group entries in the same sample group description box shall have the same value of mode.

For a G-PCC parameter set sample group entry with mode 1, the number of sample-to-group boxes of grouping type 'gpsg' shall not be greater than the number of unique values of parameter_set_type. Here, the sample-to-group boxes of grouping type 'gpsg' may contain samples mapped to the sample group entry.

For example, when the value of num_parameter_sets_minus 1 of a sample corresponding to an entry is 2 (i.e., 3 parameter sets), and one parameter_set_type is 1 (i.e., SPS) while the other two parameter_set_type values are 3 (i.e., APS), this entry may only be mapped to samples from at most two sample-to-group boxes of grouping type 'gpsg' because there are only two different parameter types.

For a G-PCC parameter set sample group entry with mode 1, the value of the syntax element num_parameter_sets_minus 1 plus 1, which specifies the number of parameter sets in the sample, shall be less than or equal to the number of parameter sets in the sample.

For a G-PCC parameter set sample group entry with mode 1, it may be constrained such that there shall be no two parameter set_offset values (gpcc_unit_offset), if present, that are the same.

The syntax for the G-PCC parameter set sample group entry according to this embodiment may be as follows.

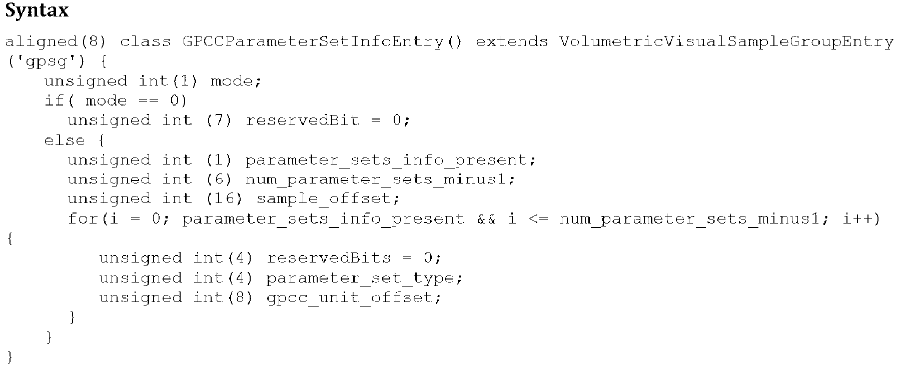

In the above, mode may indicate the information contained in the sample group entry. A value of 0 may specify that the entry represents a particular parameter set type. A value of 1 may specify that the entry represents a sample that contains one or more G-PCC parameter sets.

In the above, parameter_set_info_present equal 1 may specify that the parameter set type and its offset information are present. parameter_set_info_present equal 0 may specify that the parameter set type and its offset information are not present.

In the above, num_parameter_sets_minus1 plus 1 may specify the number of G-PCC parameter sets contained in the sample corresponding to the entry.

In the above, sample_offset may specify the sample corresponding to the entry. The (sample_offset+1)-th sample after the sync sample may be the sample corresponding to the entry. shall be greater than or equal to 0. When sample_offset is equal to 0, the first sample after the sync sample may be the sample corresponding to the entry.

In the above, parameter_set_type may specify the type of the i-th parameter set according to Table 2 below.

**[Table 2]**

| Parameterset type | Description |
|---|---|
| 0 | Reserved |
| 1 | Sequence Parameter set |
| 2 | Geometry parameter set |
| 3 | Attribute parameter set |
| 4 to 255 | Reserved |

In the above, parameter_set_offset may specify that the i-th parameter set is the parameter_set_offset+1)-th G-PCC unit in the sample corresponding to the entry. The value of parameter_set_offset shall be greater than or equal to 0. When parameter_set_offset is equal to 0, the parameter set may be the first G-PCC unit in the sample corresponding to the entry. Hereinafter, the operation of the player according to this embodiment during random access is described.

When performing random access from a particular sample Sample X, the file player may perform the following operations.

Step 1) If the sample entry of the track is 'gpe1' or 'gpc1', the file player may directly start decoding and playback from Sample X. The necessary parameter sets for decoding Sample X and samples following the same in decoding order are available in the sample entry of the track.

Step 2) Otherwise, if SyncSampleBox is present and Sample X is indicated as a sync sample, then file player may directly start decoding and playback from Sample X. The necessary parameter sets for decoding Sample X and samples that follow the same in decoding order shall be available either in the sample entry of the track or in Sample X.

Step 3) Otherwise, if parameter set sample group boxes are present and the mode of the sample group entry in the box is equal to 0, the file player may locate the samples containing the required parameter sets (i.e., SPS, GPS, and/or APS) for decoding starting from Sample X from the information provided by the parameter set sample group boxes. The samples containing the required parameter sets may be Sample X itself or samples preceding Sample X. Once those samples are located, the file parser may extract all parameter sets in those samples and make them available for decoding/playback starting from Sample X.

Step 4) Otherwise, if parameter set sample group boxes are present and the mode of the sample group entry in the box is equal to 1, the file player may locate the samples containing the required parameter sets (i.e., SPS, GPS, and/or APS) for decoding starting from Sample X from the information provided by the parameter set sample group boxes. The samples containing the required parameter sets shall be in the sample corresponding to the parameter set sample group entry that is mapped to Sample X. Once those samples are located, the file parser may extract all parameter sets in those samples and make them available for decoding/playback starting from Sample X.

Step 5) Otherwise, if the track is not 'gpe1' or 'gpc1', there is no sync sample box, and there are no parameter set sample group boxes, random access from Sample X is not specified.

Steps 1 to 5 described above may be performed sequentially. However, the present disclosure is not limited thereto; some steps may be skipped, or the order may be changed.

According to this embodiment, the location of a sample containing a parameter set required for random access may be found more easily.

### Embodiment 2)

This embodiment may be implemented by Configuration 3 described above.

The G-PCC parameter set sample group according to this embodiment may be defined as shown in Table 3

**[Table 3]**

| | |
|---|---|
| Group Types: | 'gpsg' |
| Container: | Sample Group Description Box ('sgpd') |
| Mandatory: | No |
| Quantity: | Zero or more |

A G-PCC parameter set sample group entry may define parameter set information for all samples that refer to shared G-PCC parameter sets. When multiple instances of the SampleToGroupBox with grouping _type equal to 'gpsg' are present, the versions of all SampleToGroupBoxes shall be set to 1. The G-PCC parameter set sample group entry may provide information that may help the decoder find a parameter set that is needed to decode a sample. Each G-PCC parameter set sample group entry may correspond to a sample containing the parameter set(s) required to decode the sample mapped to the entry.

For random access from a particular sample sampleX, the file parser/player shall identify the sample group entry to which Sample X is mapped for each parameter type that is needed to decode sample X, use the sample offset information and parameter set_offset information, if present, in the sample group entry to locate the sample containing the required parameter set, and extract the parameter set such that it can be included in Sample X prior to transmission for decoding.

Further, according to this embodiment, at least one of the following constraints may be applied.

The number of sample-to-group boxes of grouping type 'gpsg' shall not be greater than the number of unique values of parameter_set_type. Here, the sample-to-group boxes of grouping type 'gpsg' may contain samples mapped to the sample group entry.

For example, when the value of num_parameter_sets_minus1 of a sample corresponding to an entry is 2 (i.e., 3 parameter sets), and one parameter_set_type is 1 (i.e., SPS) while the other two parameter_set_type values are 3 (i.e., APS), this entry may only be mapped to samples from at most two sample-to-group boxes of grouping type 'gpsg' because there are only two different parameter types.

The value of the syntax element num_parameter_sets_minus1 plus 1, which specifies the number of parameter sets in the sample, shall be less than or equal to the number of parameter sets in the sample.

It may be constrained such that there shall be no two parameter set_offset values (gpcc_unit_offset), if present, that are the same.

The syntax for the G-PCC parameter set sample group entry according to this embodiment may be as follows.

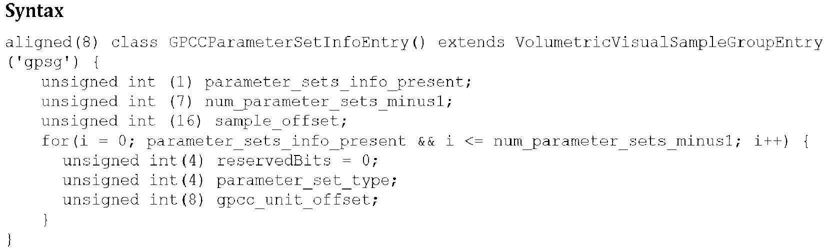

In the above, parameter_set_info_present equal 1 may specify that the parameter set type and its offset information are present. parameter_set_info_present equal 0 may specify that the parameter set type and its offset information are not present.

In the above, num_parameter_sets_minus1 plus 1 may specify the number of G-PCC parameter sets contained in the sample corresponding to the entry.

In the above, sample_offset may specify the sample corresponding to the entry. The (sample_offset+1)-th sample after the sync sample may be the sample corresponding to the entry. sample_offset shall be greater than or equal to 0. When sample_offset is equal to 0, the first sample after the sync sample may be the sample corresponding to the entry.

In the above, parameter_set_type may specify the type of the i-th parameter set according to Table 2 above.

In the above, parameter_set_offset may specify that the i-th parameter set is the (parameter_set_offset+1)-th G-PCC unit in the sample corresponding to the entry. The value of parameter_set_offset shall be greater than or equal to 0. When parameter_set_offset is equal to 0, the parameter set may be the first G-PCC unit in the sample corresponding to the entry.

Hereinafter, the operation of the player according to this embodiment during random access is described.

When performing random access from a particular sample Sample X, the file player may perform the following operations.

Step 1) If the sample entry of the track is 'gpel' or 'gpc1', the file player may directly start decoding and playback from Sample X. The necessary parameter sets for decoding Sample X and samples following the same in decoding order are available in the sample entry of the track.

Step 2) Otherwise, if SyncSampleBox is present and Sample X is indicated as a sync sample, then file player may directly start decoding and playback from Sample X. The necessary parameter sets for decoding Sample X and samples that follow the same in decoding order shall be available either in the sample entry of the track or in Sample X.

Step 3) Otherwise, if parameter set sample group boxes are present, the file player may locate the samples containing the required parameter sets (i.e., SPS, GPS, and/or APS) for decoding starting from Sample X from the information provided by the parameter set sample group boxes. The samples containing the required parameter sets shall be in the sample corresponding to the parameter set sample group entry that is mapped to Sample X. Once those samples are located, the file parser may extract all parameter sets in those samples and make them available for decoding/playback starting from Sample X.

Step 4) Otherwise, if the track is not 'gpe1' or 'gpc1', there is no sync sample box, and there are no parameter set sample group boxes, random access from Sample X is not specified.

Steps 1 to 4 described above may be performed sequentially. However, the present disclosure is not limited thereto; some steps may be skiped, or the order may be changed.

According to this embodiment, the location of a sample containing a parameter set required for random access may be found more easily even without signaling of separate mode information.

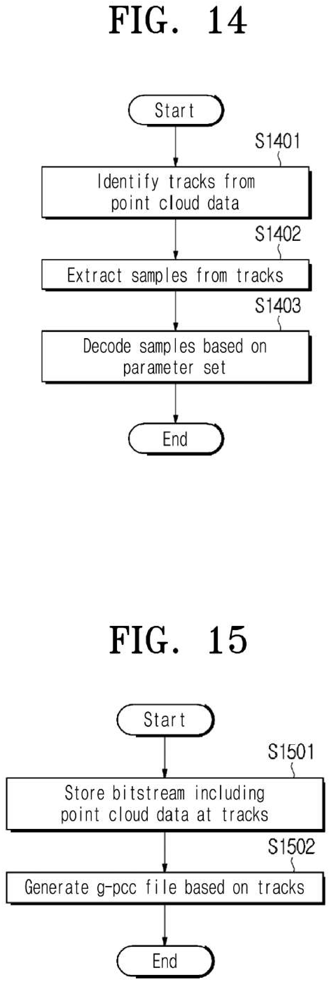

Hereinafter, with reference to FIGS. 14 and 15, a method performed by a reception device for point cloud data and a method performed by a transmission device for point cloud data according to the present disclosure will be described.

The method performed by a reception device for point cloud data according to the present disclosure may include identifying one or more tracks from the point cloud data (S1401), extracting one or more samples from the tracks (S1402), and decoding the samples based on a parameter set (S1403).

The parameter set according to the present disclosure may be obtained based on information included in a G-PCC (geometry-based point cloud compression) parameter set sample group entry.

In the method performed by the reception device for point cloud data according to the present disclosure, the information in the G-PCC parameter set sample group entry may include mode information indicating a mode of the G-PCC parameter set sample group entry.

In the method performed by the reception device for point cloud data according to the present disclosure, based on the mode information with a first value (e.g., "0"), a sample that is mapped in a sample to group box of grouping type 'gpsg' may contain a parameter set with a type equal to grouping_type_parameter of the sample to group box.

In the method performed by the reception device for point cloud data according to the present disclosure, based on the mode information with a second value (e.g., "1"), a sample that is mapped in a sample to group box with grouping type 'gpsg' may refer to the parameter set contained in a sample that corresponds to the G-PCC parameter set sample group entry.

The method performed by the reception device for point cloud data according to the present disclosure may further include, based on a sample group description with grouping_type equal to 'gpsg' and the mode information with the first value being present, identifying samples that precede a random-access starting point sampleX and that contain each of parameter set types, extracting the parameter sets; and including the extracted parameter sets in the sampleX.

The method performed by the reception device for point cloud data according to the present disclosure may further include, based on a sample group description with grouping_type equal to 'gpsg' and the mode information with the second value being present, identifying a sample group entry that a random-access starting point sampleX is mapped to, determining a location of a sample that contains a parameter set based on at least one of sample offset information or parameter set offset information in the sample group entry, extracting the parameter set, and including the extracted parameter set in the sampleX.

In the method performed by the reception device for point cloud data according to the present disclosure, all G-PCC parameter set sample group entries in a same sample group description box may be restricted to have the mode information with a same value.

In the method performed by the reception device for point cloud data according to the present disclosure, for a G-PCC parameter set sample group entry with a second value of the mode information, a number of sample to group boxes with grouping type 'gpsg' that contain samples mapped to the sample group entry may be restricted not to be greater than a number of unique values of parameter_set_types.

In the method performed by the reception device for point cloud data according to the present disclosure, for a G-PCC parameter set sample group entry with a second value of the mode information, a value of a syntax element specifying a number of parameter sets in the sample may be restricted to be equal to or less than a number of parameter sets in the sample.

In the method performed by the reception device for point cloud data according to the present disclosure, for a G-PCC parameter set sample group entry with a second value of the mode information, two parameter set offset values may be restricted not to be present with a same value.

A method performed by a transmission device for point cloud data according to the present disclosure may include storing a bitstream including the point cloud data at one or more tracks (S1501), and generating a G-PCC (geometry-based point cloud compression) file based on the tracks (S1502).

In the method performed by the transmission device for point cloud data according to the present disclosure, the tracks may include one or more samples, at least one of the samples including a parameter set, and the parameter set may be encoded based on information included in a G-PCC parameter set sample group entry.

In the method performed by the transmission device for point cloud data according to the present disclosure, the information in the G-PCC parameter set sample group entry may include mode information indicating a mode of the G-PCC parameter set sample group entry.

As described above, Embodiment 2 of the present disclosure does not signal mode information. In this case, the method according to Embodiment 2 of the present disclosure may operate identically to the method in Embodiment 1 used when the mode information is equal to the second value. The description about the method performed by the reception device for point cloud data according to the present disclosure may be applied identically or in a corresponding manner to the method performed by the transmission device for point cloud data according to the present disclosure.

Exemplary methods of the present disclosure are expressed as a series of operations for clarity of description, but this is not intended to limit the order in which steps are performed. The steps may be performed simultaneously or in a different order if necessary. To implement the methods according to the present disclosure, other steps may be additionally included in addition to the illustrated steps, or some steps may be excluded while the remaining steps are included. Alternatively, some steps may be excluded and other steps may be additionally included.

In the present disclosure, the transmission device or the reception device performing a predetermined operation (step) may perform an operation (step) of checking the execution condition or situation of the operation (step). For example, when it is described that the predetermined operation is performed when a predetermined condition is satisfied, the image encoding device or image decoding device may perform the predetermined operation after checking whether the predetermined condition is satisfied.

Various embodiments of the present disclosure are not intended to enumerate all possible combinations, but rather to describe representative aspects of the present disclosure, and the matters described in the various embodiments may be applied independently or in a combination of two or more thereof.

Various embodiments of the present disclosure may be implemented by hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

The scope of the disclosure includes software or machine-executable instructions (e.g., an operating system, an application, firmware, a program, etc.) for enabling operations according to the methods of various embodiments to be executed on an apparatus or a computer, a non-transitory computer-readable medium having such software or instructions stored thereon and executable on the apparatus or the computer.

### [Industrial Applicability]

Embodiments according to the present disclosure may be used to provide point cloud content. Furthermore, embodiments according to the present disclosure may be used to encode/decode point cloud data.

## Claims

1. A method performed by a reception device for point cloud data, the method comprising:
identifying one or more tracks from the point cloud data;
extracting one or more samples from the tracks; and
decoding the samples based on a parameter set,
wherein the parameter set is obtained based on information included in a G-PCC (geometry-based point cloud compression) parameter set sample group entry.

2. The method of claim 1, wherein the information in the G-PCC parameter set sample group entry includes mode information indicating a mode of the G-PCC parameter set sample group entry.

3. The method of claim 2, wherein, based on the mode information with a first value, a sample that is mapped in a sample to group box with grouping type 'gpsg' contains a parameter set with a type equal to grouping_type_parameter of the sample to group box.

4. The method of claim 2, wherein, based on the mode information with a second value, a sample that is mapped in a sample to group box with grouping type 'gpsg' refers to the parameter set contained in a sample that corresponds to the G-PCC parameter set sample group entry.

5. The method of claim 3, further comprising:
based on a sample group description with grouping_type equal to 'gpsg' and the mode information with the first value being present, identifying samples that precede a random-access starting point sampleX and that contain each of parameter set types;
extracting the parameter sets; and
including the extracted parameter sets in the sampleX.

6. The method of claim 4, further comprising:
based on a sample group description with grouping_type equal to 'gpsg' and the mode information with the second value being present, identifying a sample group entry that a random-access starting point sampleX is mapped to;
determining a location of a sample that contains a parameter set based on at least one of sample offset information or parameter set offset information in the sample group entry;
extracting the parameter set; and
including the extracted parameter set in the sampleX.

7. The method of claim 2, wherein all G-PCC parameter set sample group entries in a same sample group description box are restricted to have the mode information with a same value.

8. The method of claim 2, wherein, for a G-PCC parameter set sample group entry with a second value of the mode information, a number of sample to group boxes with grouping type 'gpsg' that contain samples mapped to the sample group entry is restricted not to be greater than a number of unique values of parameter_set_types.

9. The method of claim 2, wherein, for a G-PCC parameter set sample group entry with a second value of the mode information, a value of a syntax element specifying a number of parameter sets in the sample is restricted to be equal to or less than a number of parameter sets in the sample.

10. The method of claim 2, wherein, for a G-PCC parameter set sample group entry with a second value of the mode information, two parameter set offset values are restricted not to be present with a same value.

11. A method performed by a transmission device for point cloud data, the method comprising:
storing a bitstream including the point cloud date at one or more tracks; and
generating a G-PCC (geometry-based point cloud compression) file based on the tracks,
wherein the tracks include one or more samples, at least one of the samples including a parameter set, and
wherein the parameter set is encoded based on information included in a G-PCC parameter set sample group entry.
